(19) **Europäisches Patentamt European Patent Office Office européen des brevets**

(11) **EP 4 454 173 B1**

(12) **EUROPEAN PATENT SPECIFICATION**

(45) Date of publication and mention
of the grant of the patent:
**19.11.2025 Bulletin 2025/47**

(21) Application number: **22737763.7**

(22) Date of filing: **17.06.2022**

(51) International Patent Classification (IPC):
*H04L 1/00* (2006.01)      *H04B 7/06* (2006.01)

(52) Cooperative Patent Classification (CPC):
**H04L 1/0026; H04B 7/0632; H04B 7/0695;
H04L 1/0035**

(86) International application number:
**PCT/EP2022/066557**

(87) International publication number:
**WO 2023/117157 (29.06.2023 Gazette 2023/26)**

(54) **METHOD AND APPARATUS FOR VERIFYING A CHANNEL QUALITY INDICATOR MEASUREMENT**

VERFAHREN UND VORRICHTUNG ZUR ÜBERPRÜFUNG EINER KANALQUALITÄTSINDIKATORMESSUNG

PROCÉDÉ ET APPAREIL POUR VÉRIFIER UNE MESURE D'INDICATEUR DE QUALITÉ DE CANAL

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **20.12.2021 GR 20210100898**

(43) Date of publication of application:
**30.10.2024 Bulletin 2024/44**

(73) Proprietor: **Telefonaktiebolaget LM Ericsson
(publ)
164 83 Stockholm (SE)**

(72) Inventors:
• **KARAPANTELAKIS, Athanasios
169 79 Solna (SE)**
• **VANDIKAS, Konstantinos
169 73 Solna (SE)**
• **MUJUMDAR, Anusha Pradeep
Bangalore 560048 (IN)**
• **ELEFTHERIADIS, Lackis
818 32 Gävle (SE)**
• **TESLENKO, Maxim
192 74 Sollentuna (SE)**
• **R M, Karthik
Gandhinagar (IN)**
• **BADRINATH, Ramamurthy
Bangalore Karnataka 560085 (IN)**
• **NORDQUIST, Gabriella
114 58 Stockholm (SE)**

(74) Representative: **Ericsson
Patent Development
Torshamnsgatan 21-23
164 80 Stockholm (SE)**

(56) References cited:
**EP-A1- 2 367 374      US-A1- 2013 028 102**

• **KIM DONGHO ET AL: "A Study on False Channel
Condition Reporting Attacks in Wireless
Networks", IEEE TRANSACTIONS ON MOBILE
COMPUTING, IEEE SERVICE CENTER, LOS
ALAMITOS, CA, US, vol. 13, no. 5, 1 May 2014
(2014-05-01), pages 935 - 947, XP011549186,
ISSN: 1536-1233, [retrieved on 20140522], DOI:
10.1109/TMC.2013.104**
• **ZHANG ZHANZHAN ET AL: "Scheduling and
Power Allocation Dampens the Negative Effect of
Channel Misreporting in Massive MIMO", IEEE
/ACM TRANSACTIONS ON NETWORKING, IEEE /
ACM, NEW YORK, NY, US, vol. 28, no. 6, 19
August 2020 (2020-08-19), pages 2531 - 2544,
XP011825963, ISSN: 1063-6692, [retrieved on
20201215], DOI: 10.1109/TNET.2020.3014630**

EP 4 454 173 B1

**Description**

Technical Field

The present disclosure relates to a method for verifying a Channel Quality Indicator (CQI) measurement performed by a first wireless device in a communication network. The present disclosure also relates to a verification node and a computer program product.

Background

A CQI is a metric sent by a wireless device, such as a User Equipment (UE), to a Radio Access Network (RAN) Node, such as an evolved node B (eNB) or 5G node B (gNB), to which the UE is attached. The CQI is used by the RAN node for scheduling downlink data traffic from the RAN node to the UE. The RAN node performs this scheduling by selecting a downlink transmission rate for the downlink traffic based on a CQI measurement reported to the RAN node from the UE. The selected downlink transmission rate may generally comprise the selection of a suitable modulation and coding scheme (MCS) value, based on the reported CQI measurement.

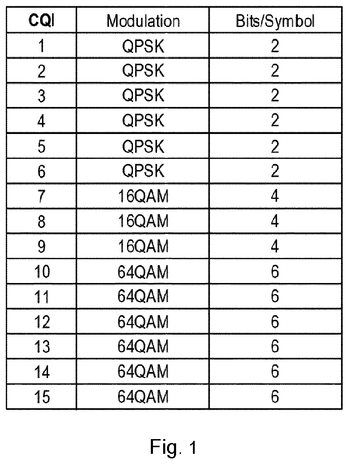

**Figure 1** illustrates an example long term evolution (LTE) modulation scheme as defined in the 3$^{rd}$ Generation Project Partnership (3GPP) Technical standard (TS) 36.213. The scheme has 15 entries associated with 15 CQI measurement values. The modulation scheme maps bits to phase and amplitude modulation of the transmitted signal. In general, improved CQI results in improved spectrum efficiency, i.e., a higher order modulation scheme that allows for more information or bits to be carried per symbol. As illustrated in Figure 1, the higher CQI values are associated with the higher order modulation schemes, which can carry a greater number of bits per symbol.

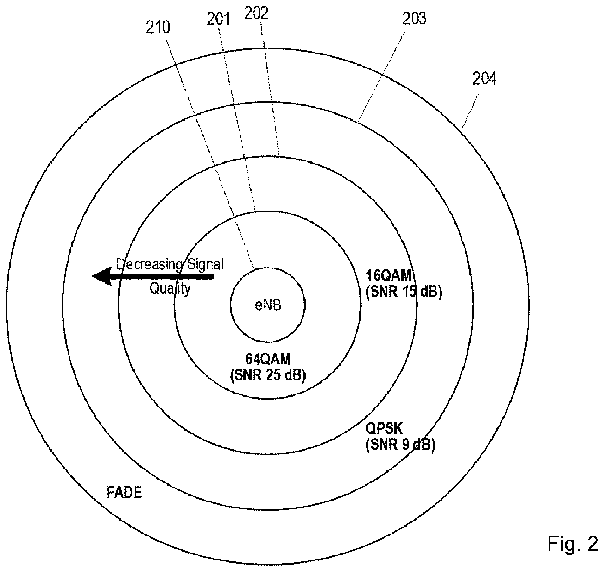

**Figure 2** illustrates an example network area 200 comprising a RAN node 210 and a plurality of geographical regions 201-204. As illustrated, a high CQI value may be reported by a UE present in a first region 201, nearest the RAN node 210, which may enable the RAN node to select a higher order modulation scheme with a signal-to-noise ratio (SNR) of 25dB. However, as second and third regions 202, 203 are further away from the RAN node 210, CQI values reported from these regions by a UE may be lower, resulting in lower order modulation schemes being selected by the RAN node. If a UE is present in fourth region 204, a reliable CQI modulation scheme for the downlink channel may not be obtainable for a UE in this region, and the downlink channel to a device in this region may suffer from fading.

The process used by a UE to measure and determine a CQI value is up to the discretion of the chipset manufacturer, and there is no standardized method for calculating CQI values. Inaccurate CQI reports can therefore occur, which may lead to the RAN node assigning an incorrect modulation scheme to the downlink channel for the UE. Incorrect assignment of a modulation scheme degrades the UE Quality of Service (QoS) and Quality of Experience (QoE), and also potentially wastes spectrum resources.

Several methods have been suggested in the state of the art to counter inaccurate CQI reports. Inaccurate reports are usually amended via link adaptation. Link adaption can be performed when the UE or RAN node determines that the UE cannot read the information the UE is receiving from the RAN node due to an incorrectly estimated CQI value, or when the UE or RAN node recalculates the CQI and determines that an improved or higher-order CQI can be established following an initially under-estimated CQI value.

KIM DONGHO ET AL: "A Study on False Channel Condition Reporting Attacks in Wireless Networks",IEEE TRANSACTIONS ON MOBILE COMPUTING, IEEE SERVICE CENTER, LOS ALAMITOS, CA, US, vol. 13, no. 5, May 2014 (2014-05-01) discusses solutions when a wireless network suffers attacks from UEs reporting false channel condition. ZHANG ZHANZHAN ET AL: "Scheduling and Power Allocation Dampens the Negative Effect of Channel Misreporting in Massive MIMO", IEEE /ACM TRANSACTIONS ON NETWORKING, IEEE / ACM, NEW YORK, NY, US, vol. 28, no. 6, 19 August 2020 (2020-08-19) studies the impact of CQI/CSI misreporting in Massive MIMO, particularly regarding its effects on scheduling and power allocation. EP 2 367 374 A1 discusses the problem of feeding back faked channel state information and proposes a solution to verify whether the channel state information sent to the base station is "real" channel information. The base station may lower the priority of a suspected attacker, such that the attacker will be scheduled less frequently than other users. According to US 2013/028102 A1, a base station can correct inaccurate CQI reports caused by SIMO/MIMO interference, by using adjustment values provided by two outer loops which are based on received ACK/NACK feedback.

The state of the art thus presents a number of methods for reporting CQI values to a RAN node from a UE. For example, US2008/0026744 discloses a method for dynamically controlling CQI reporting of a UE, such that the uplink bandwidth is used efficiently. US7,672,366 discloses a method for improving accuracy of CQI reporting by having the UE transmit test data to the RAN node before an accuracy measurement test, determine a fixed CQI value from the test data, and compare the fixed CQI value with the reported CQI value.

US10,986,524 discloses a method for improving the accuracy of CQI by measuring the CQI value on a subframe in which no downlink data is transmitted from a neighbouring cell, such that interference is reduced. A paper entitled "Predicting Channel Quality Indicators for 5G Downlink Scheduling in a Deep Learning Approach" by Yin et al, provides a predictive model which learns to predict CQI using historical data.

Accurate CQI determination and reporting is important, because the CQI value dictates the modulation scheme that is chosen for the downlink channel. If an inaccurate CQI value is determined and reported, this can result in wasted network resources. For example, data packet retransmissions on the downlink channel may occur as the UE may not be able to decode the transmitted information. In another example inaccurate CQI reporting may result in a CQI measurement request retransmission from the RAN node to the UE, as the RAN node tries to establish the conditions of the channel between the RAN node and the UE.

Summary

It is the aim of the present disclosure to provide a method, a verification node and a computer program product which at least partially address one or more of the challenges discussed above.

According to a first aspect there is provided a method for verifying a Channel Quality Indicator, (CQI) measurement performed by a first wireless device in a communication network. The communication network comprises a Radio Access Network (RAN). The method, performed by a verification node, comprises: obtaining a first CQI measurement report comprising a first CQI measurement value of a measurement performed by the first wireless device on for a first downlink channel between a first RAN node and the first wireless device; identifying at least one neighbour wireless device to the first wireless device; obtaining at least one neighbour CQI measurement report from the at least one neighbour wireless device; aggregating the at least one neighbour CQI measurement report into a reference CQI measurement report set; and verifying the first CQI measurement value using the reference CQI measurement report set.

According to a second aspect there is provided a verification node for verifying a CQI measurement value. The verification node comprises processing circuitry configured to: obtain a first CQI measurement report comprising a first CQI measurement value of a measurement performed by the first wireless device for a first downlink channel between a RAN node and the first wireless device; identify at least one neighbour wireless device to the first wireless device; obtain at least one neighbour CQI measurement report from the at least one neighbour wireless device; aggregate the at least one neighbour CQI measurement reports into a reference CQI measurement report set; and verify the first CQI measurement value using the reference CQI measurement report set.

According to a third aspect there is provided a computer program product comprising a computer readable medium, the computer readable medium having computer readable code embodied therein, the computer readable code being configured such that, on execution by a suitable computer or processor, the computer or processor is caused to perform a method according to the first aspect.

Aspects and examples of the present disclosure thus provide a method, verification node and computer program product that make use of at least one neighbouring CQI measurement in order to verify the accuracy of a CQI measurement report provided by a wireless device. In this manner, the experience of neighbouring wireless devices may be used to provide a benchmark for comparison, assisting in identifying CQI measurements that may be inaccurate, and enabling either or both of a RAN node or wireless device to take appropriate action.

Brief Description of the Drawings

For a better understanding of the present disclosure, and to show more clearly how it may be carried into effect, reference will now be made, by way of example, to the following drawings in which:

Figure 1 is a table illustrating example modulation schemes for CQI values;

Figure 2 is an example network area;

Figures 3a and 3b are example network scenarios;

Figure 4 is a flow chart illustrating a method performed by a verification node;

Figures 5a-f are flow charts illustrating another example of a method performed by a verification node;

Figures 6a and 6b is an example signalling diagram;

Figure 7 is another example of a signalling diagram;

Figure 8 is another example of a signalling diagram; and

Figure 9 is an example of a verification node.

Detailed Description

The present disclosure relates to a method for verifying a CQI value for a downlink channel between a first RAN node and a first wireless device, based on previously measured CQI values of downlink channels between the first RAN node and 'neighbour' wireless devices that share similar characteristics to the first wireless device. The similar characteristics may comprise, for example, modem chipset, manufacturer, antenna types etc. As described above, CQI measurement reporting is not standardized, and in examples according to the present disclosure, the verification of the reported CQI value may be restricted, such that it is based on previous CQI measurements reports which may have been measured and reported in a similar way to that of the CQI measurement reported by the first wireless device. Furthermore, the 'neighbour' wireless devices may be located relatively close to the first wireless device such that the first wireless device and 'neighbour' wireless devices are within the same geographic area. There may further be low path loss between the first wireless device and the 'neighbour' wireless devices. In one example, the 'neighbour' wireless devices may be identified, such that they can communicate with the first wireless device using device-to-device (D2D) sidelink communication or short-range wireless communication technology, such as Bluetooth (RTM). The CQI measurement reports from the 'neighbour' wireless devices may also be for downlink channels between the same first RAN node and the 'neighbour' wireless devices.

By verifying the CQI measurement against other CQI measurements, it may be determined if the reported CQI measurement report is accurate or inaccurate. Furthermore, by verifying the CQI measurement report from the first wireless device against relevant CQI measurement reports from 'neighbour' wireless devices, the accuracy of this verification is improved. None of the methods referenced above in the background section discuss using the CQI reports of other wireless devices to contribute to accurate CQI reporting.

The verification method may be performed by a wireless device measuring the CQI measurement. In other examples, the verification method may be performed by the RAN node to which the wireless device that provides the CQI measurement is attached. The verification method, according to examples of the present disclosure, may therefore be performed by a verification node, which may be instantiated in either or both of a wireless device or a RAN node.

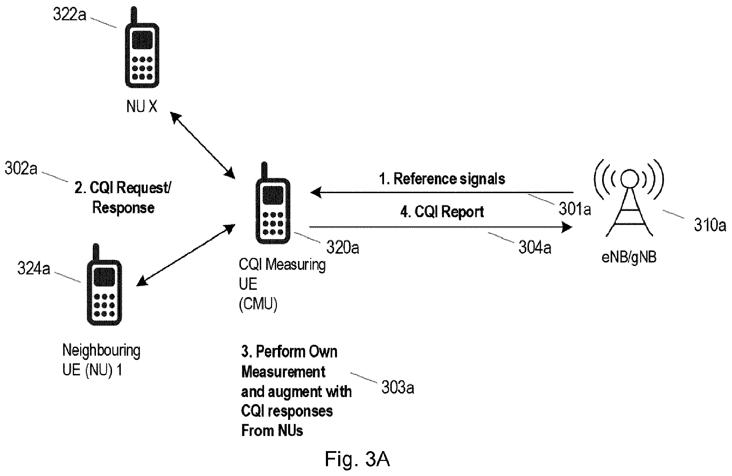

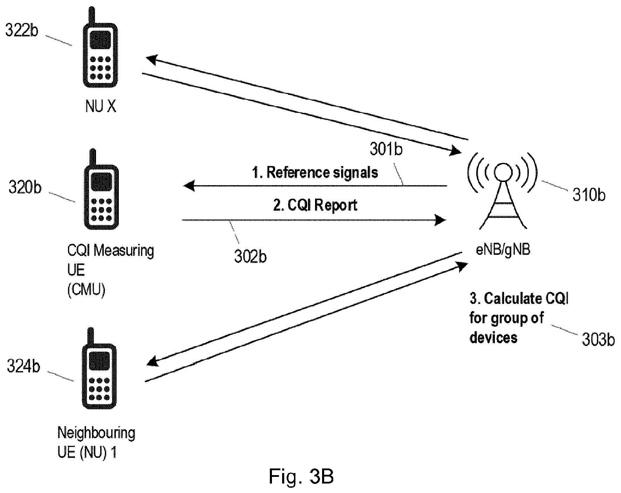

**Figures 3a and 3b** illustrate network scenarios 300a, 300b, according to examples of the present disclosure.

Referring to Figure 3a, network scenario 300a comprises RAN node 310a, a first UE 320a, and one or more neighbour UEs 322a, 324a. Figure 3a presents a network scenario 300a in which the first UE 320a verifies its own CQI measurement, measured at the first UE 320a, against neighbour CQI measurements obtained from the neighbour UEs 322a, 324a.

First UE 320a may be attached to RAN node 310a, and RAN node 310, in a first step, may broadcast reference signals 301a that are received by the first UE 320a. The first UE 320a uses the received reference signals to perform a CQI measurement . As will be described in more detail below, the RAN node 310a or the first UE 320a may initiate the CQI measurement process in response to a trigger, such as, upon completion of a handover operation.

In a second step 302a, first UE 320a may subsequently transmit a request to one or more neighbour UEs 322a, 324a, and receive one or more neighbour CQI measurement reports from the one or more neighbour UEs 322a, 324a. As described above, through D2D sidelink communication or short range wireless communication, the first UE 320 may discover the neighbour UEs 322a, 324a with similar characteristics to the first UE 320. As further described above and will be described in more detail below, the first UE 320 may select more relevant neighbour CQI measurement reports from the set reported by the one or more neighbour UEs 322a, 324a, for example based on a filtering or pruning procedure.

In some examples, the UE may obtain neighbour CQI measurements before performing its own CQI measurement. In such examples, once the first UE 320a has received (and filtered if appropriate) the neighbour CQI measurement reports, in step 303a the first UE 320a performs a CQI measurement. In other examples, the first UE 320a may perform the CQI measurement upon receipt of the reference signal transmitted from the RAN node 310a, and obtain neighbour CQI measurements after performing its own measurement. The first UE 320a further aggregates the neighbour CQI measurement reports into a reference CQI measurement report set, and verifies the measured CQI measurement against the reference CQI measurement report set. As will be described in more detail below, in some examples, the verification may be performed using a rules-based approach. In further examples, the verification may be performed using a Machine Learning (ML) approach.

Depending on the outcome of the verification, in step 304a, the first UE 320a transmits a CQI measurement report to the first RAN node 310a. If the CQI measured by the first UE 320a is verified and reliable, the first UE 320a reports the measured CQI measurement. If the CQI measured by the first UE 320a is unverified or considered unreliable, the first UE 320a may report a CQI measurement report based on the neighbour CQI measurement reports, or may repeat its own measurement.

Figure 3b presents a network scenario 300b in which the RAN node 310b performs the verification of a measured CQI measurement report. Network scenario 300b comprises corresponding elements to network scenario 300a, but which are suffixed with the letter 'b'.

In a first step 301b, the RAN node 310b broadcasts a reference signal that is received by the first UE 320b, and in step 302b the RAN node 310b receives a CQI measurement report, obtained using the reference signal. The RAN node 310b also identifies one or more neighbour UEs 322b, 324b and transmits a request to the one or more neighbour UEs 322b, 324b for one or more neighbour CQI measurement reports, stored in the one or more neighbour UEs 322b, 324b. The RAN node 310b may also prune or filter the received neighbour CQI measurement reports, in a similar manner to the first UE 320a of network scenario 300a, and which will be described in more detail below.

Once the RAN node 310b has received, and optionally filtered, the neighbour CQI measurement reports, in step 303b, the RAN node aggregates the neighbour CQI measurement reports into a reference CQI measurement report set. The RAN node 310b then verifies the CQI measurement from the first UE 320b based on the reference CQI measurement report set. As will be described in more detail below, in a similar manner to the first UE 320a of network scenario 300a, the verification may be performed using a rules-based approach and/or an ML-based approach.

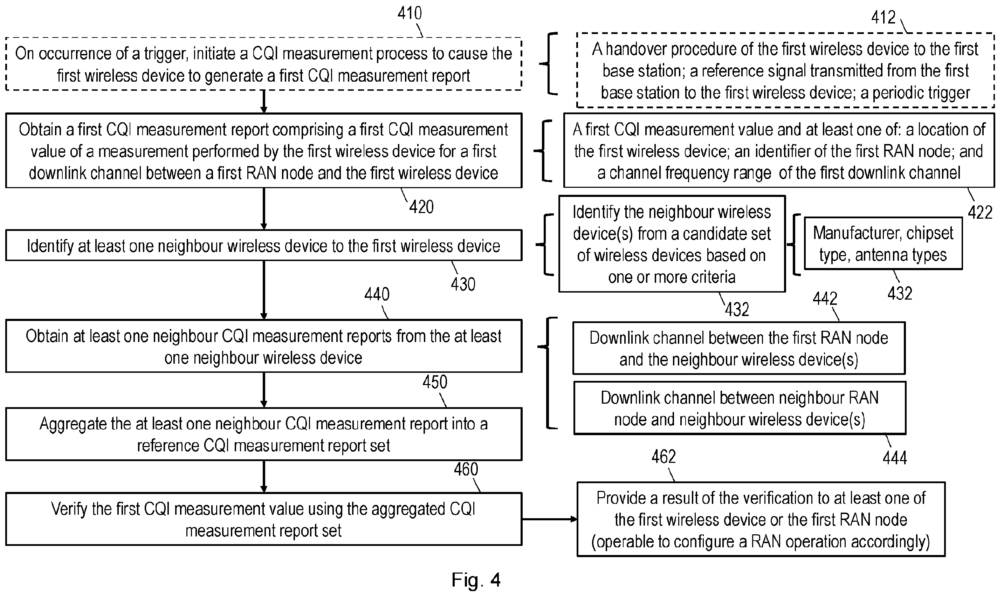

**Figure 4** is a flowchart illustrating process steps in a method 400 for verifying a CQI measurement performed by a first wireless device in a communication network. The communication network comprises a RAN and the method is performed by a verification node. The verification node may be a physical or a virtual node, and may comprise one of more logical elements. As described above, the verification node may be instantiated in the first wireless device or a RAN node of the communication network.

The method 400 may begin, in a step 410, on occurrence of a trigger, initiating a CQI measurement process to cause the first wireless device to generate a first CQI measurement report. The trigger may comprise, for example, as outlined in step 412, a handover procedure of the first wireless device to a first RAN node; a reference signal transmitted from the first RAN node to the first wireless device; or a periodic trigger.

The method 400 thus further comprises, in step 420, obtaining a first CQI measurement report comprising a first CQI measurement value of a measurement performed by the first wireless device for a first downlink channel between a first RAN node and the first wireless device. The first CQI measurement report may comprise, as illustrated in step 422, a first CQI measurement value and at least one of: a location of the first wireless device; an identifier of the first RAN node; and/or a channel frequency range of the first downlink channel.

As described above, in some examples, the verification node may be instantiated in the first wireless device, and obtaining the first CQI measurement report may comprise the first wireless device performing the measurement of the first CQI measurement report. In other examples, the verification node may be instantiated in the first RAN node, and obtaining the first CQI measurement report may comprise receiving the first CQI measurement report from the first wireless device.

The method 400 further comprises, in step 430, identifying at least one neighbour wireless device for the first wireless device. As illustrated in step 432, identifying at least one neighbour wireless device for the first wireless device may comprise identifying the at least one neighbour wireless device from a candidate set of wireless devices based on one or more criteria. As illustrated in step 434, the one or more criteria may comprise at least one of: manufacturer of the first wireless device; chipset type of the first wireless device; antenna types of the first wireless device. By identifying the neighbour wireless devices based on such criteria, more relevant neighbour CQI reports may be obtained for verifying the first CQI measurement report.

The method 400 further comprises, in step, 440, obtaining at least one neighbour CQI measurement report from the at least one neighbour wireless device. As illustrated in step 442, the at least one neighbour CQI measurement report may comprise a neighbour CQI measurement value of a measurement performed by the at least one neighbour wireless device on a downlink channel between the first RAN node and the at least one neighbour wireless device. As illustrated in step 444, the at least one neighbour CQI measurement report may additionally or alternatively comprise a neighbour CQI measurement value of a measurement performed by the at least one neighbour wireless device on a downlink channel between a neighbour RAN node and the at least one neighbour wireless device. As described above, a neighbour RAN node may comprise a RAN node that is within range of the first wireless device such that the first wireless device can communicate with the neighbour RAN node on a Physical Downlink Shared Channel (PDSCH).

The method 400 further comprises, in step 450, aggregating the at least one neighbour CQI measurement report into a reference CQI measurement report set.

The method 400 further comprises, in step 460, verifying the first CQI measurement value using the reference CQI measurement report set. The method 400 may further comprise, in step 462, providing a result of the verification to at least one of the first wireless device or the first RAN node, wherein each of the first wireless device and the first RAN node are operable to configure a Radio Access Network operation according to a result of the verification. The RAN operation may comprise for example transmission of a CQI measurement report, performance of a CQI measurement, selection of an MCS value for the wireless device etc.

For example, if the verification node is instantiated in the first wireless device and the CQI measurement is verified as reliable, the Radio Access Network operation may comprise a transmission of a CQI measurement report to the first RAN node, and the configuration of this operation performed by the first wireless device may be to select the verified measurement report for transmission. In other examples, if the verification node is instantiated in the first wireless device and the CQI measurement is considered unreliable following verification, the first wireless device may configure transmission of a CQI measurement report by first repeating the CQI measurement in order to obtain a more reliable measurement for transmission, or by transmitting a request to the first RAN node for a new reference signal for a repeated CQI measurement, or by selecting for reporting a measurement value based on the obtained neighbour CQI measurement reports.

In other examples, the verification node may be instantiated in the RAN node, and the Radio Access Network operation may comprise the RAN node selecting an MCS value for transmission of data to the first wireless device on the first downlink channel. If the CQI measurement is verified as reliable, the RAN node may configure this operation by selecting the MCS value that corresponds to the reported CQI measurement value.. In other examples, if the verification node is instantiated in the RAN node and the CQI measurement is considered unreliable following verification, the RAN node may configure selection of an MCS value by selecting the MCS value based on the reference CQI measurement report set, or by transmitting a new reference signal to the first wireless device for a new CQI measurement, or by incrementing or otherwise adjusting the unreliable CQI measurement with refence to the reference CQI measurement report set before selecting a suitable MCS value.

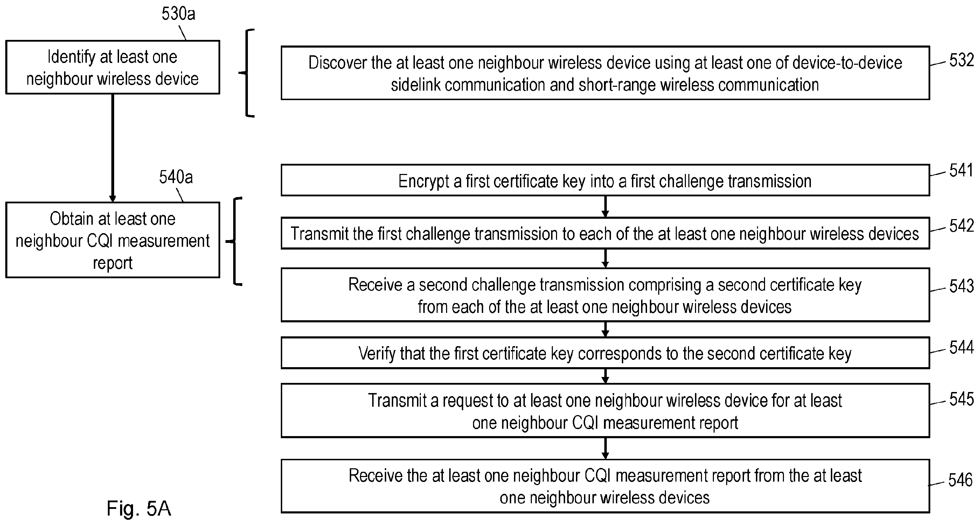

**Figures 5a-f** show a flow chart illustrating process steps in another example of a method 500a-f for verifying a CQI measurement performed by a first wireless device in a communication network, wherein the communication network comprises a RAN. As for the method 400 above, the method 500a-f is performed by a verification node. The method 500a-f provides different examples of how the some of the steps of the method 400 may be implemented and supplemented to achieve the above discussed and additional functionality.

Referring to Figure 5a, the method 500a illustrates process steps that may be performed when the verification node is instantiated in the first wireless device. In such examples, the step 530 of identifying at least one neighbour wireless device to the first wireless device may comprise, in step 532, discovering the at least one neighbour wireless device using at least one of D2D sidelink communication or short-range wireless communication, such as Bluetooth (RTM).

The method 500a further comprises, in step 540a, obtaining at least one neighbour CQI measurement report from the at least one neighbour wireless device. Obtaining the at least one neighbour CQI measurement report may comprise, in step 541, encrypting a first certificate key into a first challenge transmission and, in step 542, transmitting the first challenge transmission to each of the at least one identified neighbour wireless devices. Step 540a may thus further comprise, in step 543, receiving a second challenge transmission comprising a second certificate key from each of the at least one neighbour wireless devices and, in step 544, verifying that the first certificate key corresponds to the second certificate key. In some examples the use of the certificate keys, using a challenge-based authentication process, may improve the security of transmission between the first wireless device and the one or more neighbour wireless devices. In some examples, the first and second certificate keys may be hardcoded into wireless devices of a certain type at manufacture e.g. wireless devices of a particular manufacturer may have a particular key certificate hardcoded into the device on manufacture.

The step 540a of obtaining at least one neighbour CQI measurement may further comprise, in step 545, transmitting a request to at least one neighbour wireless device for a neighbour CQI measurement report and, in step 546, receiving the at least one neighbour CQI measurement report in response to the request. In some examples, the transmission of the request in step 545 may be performed in response to a successful verification of the at least one neighbour wireless device in step 544.

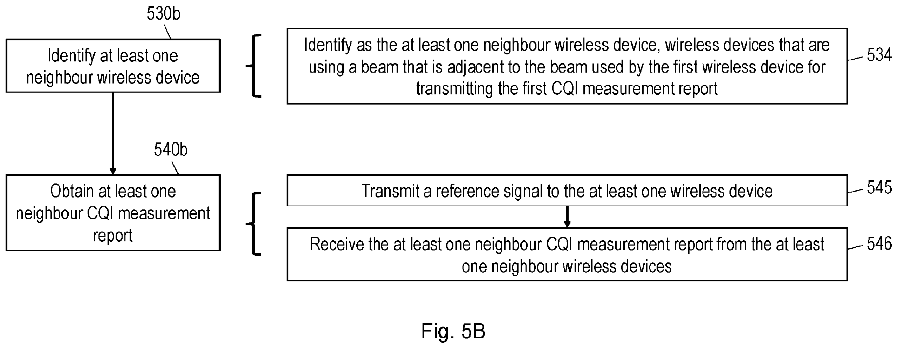

Referring now to Figure 5b the method 500b illustrates process steps that may be performed when the verification node is instantiated in the first RAN node. In such examples, the step 530b of identifying at least one neighbour wireless device to the first wireless device may comprise, in step 531, identifying, as the at least one neighbour wireless device, wireless devices that are using a beam that is adjacent to the beam used by the first wireless device for transmitting the first CQI measurement report. For example, a neighbour wireless device may be identified as a wireless device that is communicating with the first RAN node on a beam which is adjacent the beam used for transmitting the reference signal to the first wireless device.

The step 540b of obtaining at least one neighbour CQI measurement report from the at least one neighbour wireless device, may comprise, in step 547, transmitting a reference signal to the at least one wireless device and, in step 548, receiving the at least one neighbour CQI measurement report from the at least one neighbour wireless device.

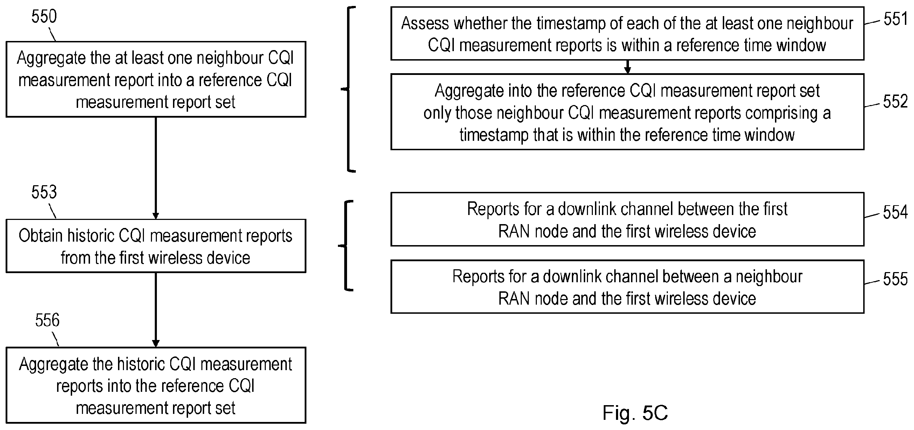

Referring to Figure 5c, the method 500c illustrates process steps that may be performed when the verification node is instantiated in either the first wireless device or the first RAN node. The method 500 comprises, in step 550, aggregating the at least one neighbour CQI measurement reports into a reference CQI measurement report set. As illustrated in the method 500c, the step 550 of aggregating may comprise, in step 551, assessing whether a timestamp of each of the at least one neighbour CQI measurement reports is within a reference time window and, in step 552, aggregating into the reference CQI measurement report set only those neighbour CQI measurement reports comprising a timestamp that is within the reference time window. In some examples, the reference time window may extend backwards in time from a present time, or from a timestamp of the obtained first CQI measurement report. In some examples, a length of the reference time window may be set based on the mobility of the first wireless device. For example, a static first wireless device may be associated with a longer reference time window than a rapidly moving first wireless device.

The method 500c may further comprise, in step 553, obtaining historic CQI measurement reports from the first wireless device and, in step 556, aggregating the historic CQI measurement reports into the reference CQI measurement report set. For example, a memory of the first wireless device or the first RAN node may store previously reported CQI measurement reports. The historic CQI measurement reports may comprise, in step 554, one or more CQI measurement values for a downlink channel between the first RAN node and the first wireless device. The historic CQI measurement reports may comprise, in step 555, one or more CQI measurement values for a downlink channel between a neighbour RAN node and the first wireless device. In the case of a verification node instantiate din the first RAN node, the first RAN node may request and receive such reports from the neighbour RAN node.

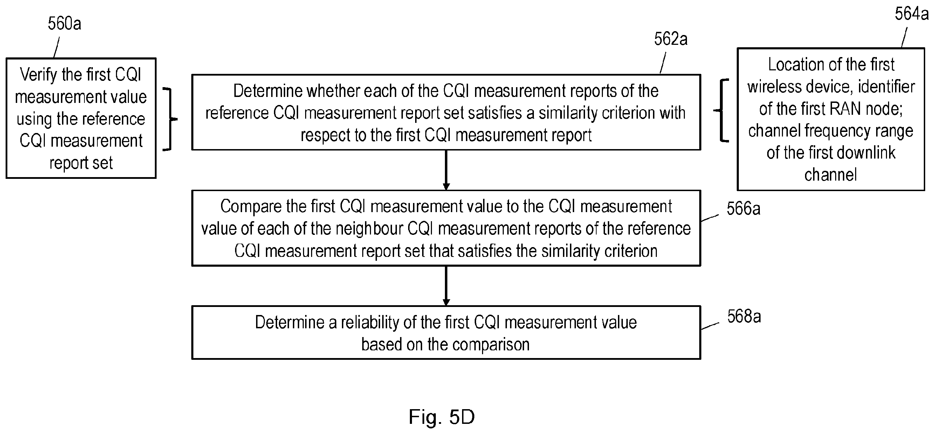

Figures 5d-f illustrate process steps in example methods for performing step 560 of verifying the first CQI measurement value using the reference CQI measurement report set. The steps illustrated in Figures 5d to 5f may eb performed by the verification node regardless of whether it is instantiated in the first wireless device or the first RAN node.

Referring to Figure 5d, in a first example, the step 560a of verifying the first CQI measurement value using the reference CQI measurement report set may comprise, in step 562a, determining whether each of the CQI measurement reports of the reference CQI measurement report set satisfies a similarity criterion with respect to the first CQI measurement report. The similarity criterion may be based on at least one of, as outlined in step 564a, a location of the first wireless device; an identifier of the first RAN node; and/or a channel frequency range of the first downlink channel.

Step 560 further comprises, in step 566a, comparing the first CQI measurement value to the CQI measurement value of each of the neighbour CQI measurement reports of the reference CQI measurement report set that satisfies the similarity criterion and, in step 568a, determining a reliability of the first CQI measurement value based on the comparison. As will be described in more detail below, the steps of the verification method outlined in steps 562a-568a, may correspond to a rules-based algorithm for verifying the first CQI measurement using the reference CQI measurement report set.

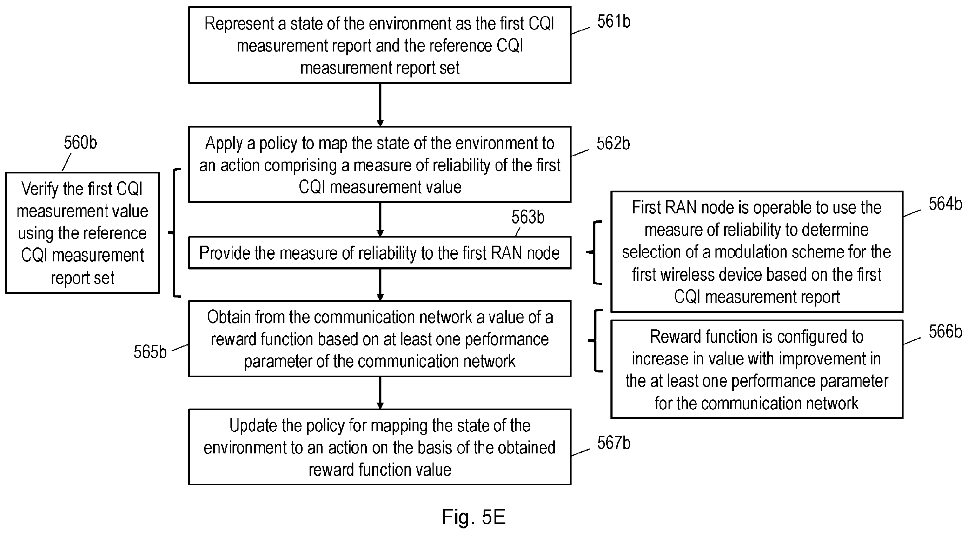

Referring to Figure 5e, in another example, the step 560b of verifying the first CQI measurement value using the reference CQI measurement report set may comprise using a Reinforcement Learning (RL) approach to verify the first CQI measurement value. The RL approach may involve a value-learning based process, for example a Deep Q-learning process such as a double deep Q-learning algorithm, as disclosed in "Deep Reinforcement Learning with Double Q-learning" by Hado by van Hasselt et al, arXiv:1509.06461. Another example of a Deep Q-learning algorithm is a Deep Recurrent Q-learning algorithm, as disclosed in "Deep Recurrent Q-Learning for Partially Observable MDPs" by Matthew Hausknecht et al, arXiv:1507.06527.

As illustrated in Figure 5e, using the RL approach to verify the first CQI measurement value may comprise, in step 561b, representing a state of an environment for the Reinforcement Learning as the first CQI measurement report and the reference CQI measurement report set and, in step 562b, applying a policy to map the state of the RL environment to an action comprising a measure of reliability of the first CQI measurement value. For example, based on previous CQI measurements and observations resulting from certain actions, the RL algorithm may have developed a policy that proposes an action comprising a measure of the reliability of the first CQI measurement value that is based on the first CQI measurement report and the reference CQI measurement report set and based on the action.

According to the present example, step 560 further comprises, in step 563b, providing the measure of reliability (the action proposed by the policy) to the first RAN node and, in step 565b, obtaining from the communication network a value of a reward function based on at least one performance parameter of the communication network. As illustrated in step 564b, the first RAN node may be operable to use the measure of reliability to determine selection of an MCS value for the first wireless device based on the first CQI measurement report. For example, if the measure of reliability is high, the first RAN node may select the MCS value that corresponds to the value in the first CQI measurement report. If the measure of reliability is low, the RAN node may adjust the selection of MCA value accordingly. Following selection of the MCS value and subsequent operation of the first UE and RAN node, the verification node obtains the reward function value. As illustrated at step 566b, the reward function may be configured to increase in value with improvement in the at least one performance parameter for the communication network. In some examples, the at least one performance parameter may comprise at least one of: latency; jitter; packet drop rate; throughput; handover success; Radio Resource Control (RRC); Connection success; R-UTRAN; Radio Access Bearer (ERAB) establishment success; call drop rate; and call successful setup rate.

In some examples, selection of a modulation scheme resulting in a positive reward may be indicative that the measured first CQI value has been correctly verified, resulting in selection of a suitable modulation scheme. This may result from correct verification that an accurate first CQI measurement value is reliable, or from correct verification that an inaccurate first CQI measurement value is unreliable, enabling the first RAN node to either take steps to obtain a more accurate measurement or select a modulation scheme to account for inaccuracies in the measurement. A negative reward may be produced as a result of the measured CQI being incorrectly verified.

Following receipt of the reward value, the verification node may update the policy for mapping the state if the RL environment to an action (measure of reliability) on the basis of the obtained reward function value in step 567b.

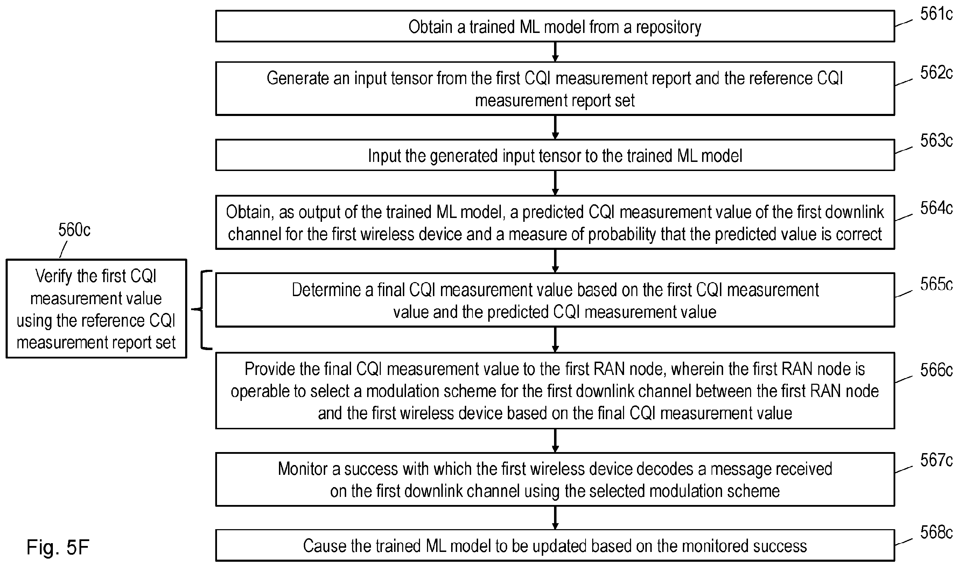

Referring to Figure 5e, Referring to Figure 5f in another example, the step 560c of verifying the first CQI measurement value using the reference CQI measurement report set may comprise using a supervised Machine Learning (ML) approach. For example, an ML model may be trained to output a predicted CQI measurement value for the first downlink channel on the basis of inputs to the model comprising the first CQI measurement report and the reference CQI measurement report set.

As illustrated in Figure 5f, the step 560c may comprise in step 561c, obtaining a trained ML model from a repository. In some examples, a plurality of ML models may be trained for different first wireless device characteristics. Such characteristics may comprise, for example, device type, speed, location, etc. The verification node may thus be configured to select one model or be provisioned with one of the models based on these characteristics. In other examples, an ensemble of models may be obtained based on first wireless device characteristics, and the predicted CQI values output from each model may be combined to produce a predicted CQI measurement value. In some examples, in which the verification node is instantiated in the first wireless device, the first wireless device may be provisioned with a trained ML model from a RAN node, which model has been trained for a wireless device with characteristics corresponding to the characteristics of the first wireless device and its present situation and/or location. For example, the characteristics may comprise any one of manufacturer, antenna type or modem firmware version.

Step 560c further comprises, in step 562c, generating an input tensor from the first CQI measurement report and the reference CQI measurement report set, and in step 563c, inputting the generated input tensor to a trained ML model. Step 560c then comprises, in step 564c, obtaining, as an output of the trained ML model, a predicted CQI measurement value of the first downlink channel for the first wireless device and a measure of probability that the predicted value is correct. For example, the measure of probability may comprise a probability distribution associated with the outputs of the trained ML model.

Step 560c further comprises, in step 565c, determining a final CQI measurement value based on the first CQI measurement value and the predicted CQI measurement value and, in step 566c, providing the final CQI measurement value to the first RAN node, wherein the first RAN node is operable to select a modulation scheme for the first downlink channel between the first RAN node and the first wireless device based on the final CQI measurement value. For example, the probability that the predicted value output by the trained ML model is correct may be used to provide a weighting for combining the predicted value with the value of the first CQI measurement report in order to generate the final CQI measurement value. For example, if the predicted CQI value is associated with a very high measure of probability, this may carry more weight when combining it with the first CQI measurement value than if the predicted value is associated with a lower probability.

Step 560c 5f further comprises, in step 567c, monitoring a success with which the first wireless device decodes a message received on the first downlink channel using the selected modulation scheme and, in step 568c, causing the trained ML model to be updated based on the monitored success. For example, updating the trained ML model may comprise adding the predicted CQI measurement value and corresponding input tensor to a training data set with an appropriate label regarding whether the predicted CQI was correct. The new training data entry may be used by the verification node to update the model, or may be provided to a repository or other entity responsible for maintaining the ML model.

Figures 4-5f discussed above provide an overview of methods which may be performed according to different examples of the present disclosure. These methods may be performed by a verification node, which may be instantiated in a first wireless device or a first RAN node, for example, as illustrated in Figures 3a and 3b, respectively. There now follows a detailed discussion of how different process steps illustrated in Figures 4-5f and discussed above may be implemented.

It will be appreciated that a user equipment (UE) is one possible example of a wireless device, and whilst portions of the present disclosure explain the operations of the first wireless device and the neighbour wireless devices using a UE as an example, it will be understood that this is merely for the purposes of illustration, and other implementations of wireless devices may be envisaged in connection with the methods disclosed herein.

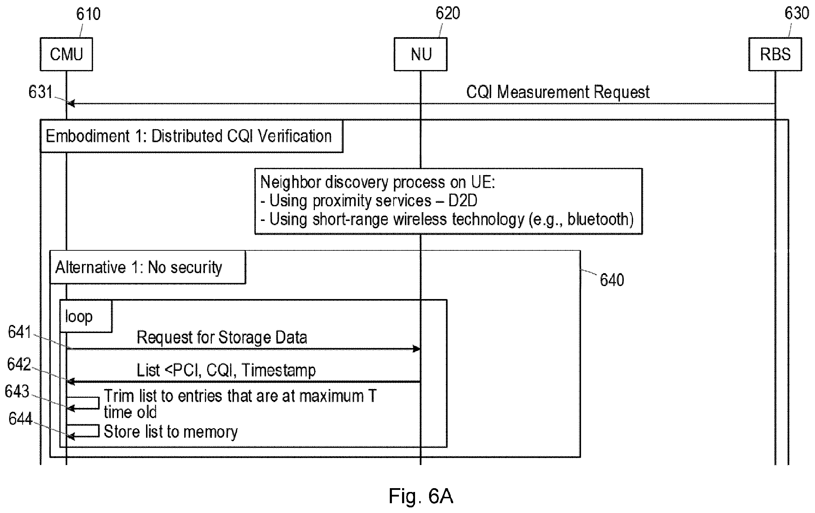

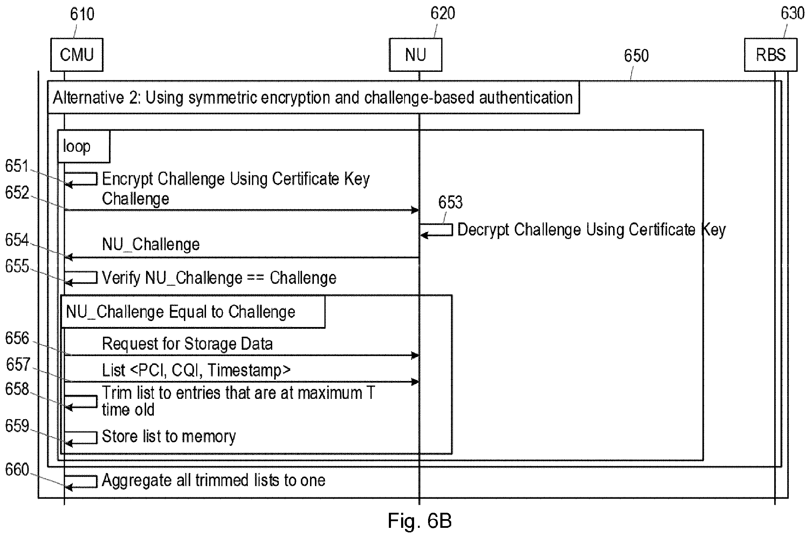

**Figure 6a and 6b** are signalling diagrams illustrating the transmission of messages between a first UE 610, first RAN node 630 and at least one neighbour UE 620. Figures 6a and 6b illustrate signalling diagrams for obtaining the neighbour CQI measurement report(s) when the verification node is instantiated in the first UE 610. The messages transmitted in the signalling diagram 600a may thus correspond to one or more of the transmitted messages described above, with respect to Figure 3a and 5a.

Referring to Figure 6a, first RAN node 630 may transmit a CQI measurement request message 631, which may comprise a reference signal for measuring a CQI measurement value. This reference signal may be transmitted in response to a trigger operation such as any of the triggers identified in step 412, with respect to Figure 4. Based on this reference signal the first UE 610 may perform a first CQI measurement.

In response to receiving the reference signal, the first UE 610 may initiate a process to discover the neighbour UE 620. The process to discover the neighbour UE 620 may be carried before, after or concurrently with the first UE 610 performing the first CQI measurement. As described above, with reference to step 532, the discovery can be performed using D2D sidelink communication, provided that the neighbour UE 620 is capable of performing such communication. In another example, the discovery can take place using short range wireless communication, such as Bluetooth (RTM).

Message flow 640 illustrates one example process for the first UE to obtain the neighbour CQI measurement reports from the neighbour UE 620. In a first message 641, the first UE 610 may transmit a request for the neighbour CQI measurement report(s) to the neighbour UE 620. The first UE may then receive a message 642 from the neighbour UE comprising the neighbour CQI measurement report(s) stored in the neighbour UE 620. As will be described in more detail below, each CQI measurement report may comprise a list of 3-tuples comprising a CQI measurement value, information identifying the RAN node associated with the CQI value, and a timestamp.

First UE 610 may, in step 643, trim or filter the received neighbour CQI measurement reports, for example based on a cut-off time or a time window as described with reference to step 552 above. In one example, the first UE may filter the received neighbour CQI measurement reports such that only reports that are at most 1 minute, 5 minutes, 10 minutes, 15 minutes etc. old are considered for subsequent analysis. By performing such filtering, the CQI measurement reports used for further analysis may present a more relevant representation of the current state of the network conditions relative to the first RAN node. In step 644, the first UE 610 aggregates the filtered CQI measurements and stores them to memory.

Figure 6b illustrates an alternative method for the first UE 610 to obtain the neighbour CQI measurement report(s) from the neighbour UE 620 using a challenge-based authentication process where neighbour UE 620 authenticates to the first UE 610 as a legitimate entity. Such authentication process may improve the security of the communication between the first UE 610 and the neighbour UE 620. Such authentication may be performed, for example, when devices which share a common device manufacturer or radio chipset manufacturer exchange data to improve their reporting capability. The authentication may be performed using a cryptographic key, stored in a certificate that is hardcoded into the chipset of each wireless device.

Upon discovering the neighbour UE 620, first UE may, in step 651, encrypt a first challenge into a challenge transmission using a certificate key and, in step 652, transmit the challenge transmission to the neighbour UE 620.

In step 653, the neighbour UE 620 decrypts the challenge using its own certificate key and transmits, in step 654, a second challenge transmission comprising a second challenge to the first UE 610.

First UE 610 verifies, in step 655, that the first challenge corresponds to the second challenge and may consequently determines that the neighbour UE is a legitimate entity.

Once the first UE has verified the legitimacy of the neighbour UE, the first UE requests, receives, trims, aggregates and stores the received neighbour CQI measurements in steps 656-660, in a corresponding way to steps 641-644, described above with respect to Figure 6a.

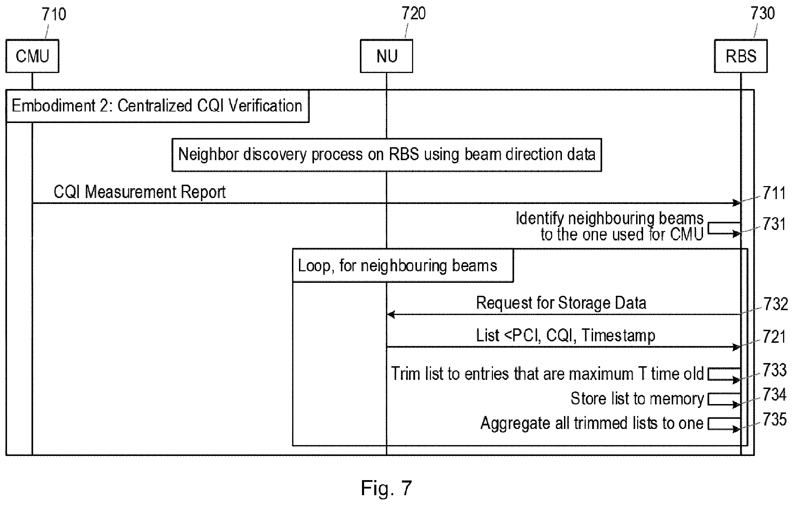

**Figure 7** is a signalling diagram illustrating the transmission of messages between a first UE 710, first RAN node 730 and at least one neighbour UE 720. Figure 7 illustrates a signalling diagram for obtaining the neighbour CQI measurement report(s), when the verification node is instantiated in the first RAN node 730. The messages transmitted in the signalling diagram 700 may thus correspond to one or more of the transmitted messages described above, with respect to Figure 3b.

In a first message 711, the first RAN node 730 may receive a first CQI measurement report from the first UE 710. The first CQI measurement report may be measured by the first UE 710, in response to a reference signal previously transmitted to the first UE 710. The first CQI measurement report may be received in response to a trigger operation, including for example any of the triggers identified in step 412, with respect to Figure 4.

In step 731, the first RAN node identifies the neighbour UE 720 by identifying a UE that is communicating with the first RAN node 730 on a beam which is adjacent to the beam used for transmitting the reference signal to the first UE 710, as further described above with respect to step 531. The first RAN node 730 may thus leverage beamforming to identify the neighbour UE 720.

Once the neighbour UE 720 has been identified by the first RAN node 730, the first RAN node 730 transmits a request 732 for the neighbour CQI measurement reports stored in the neighbour UE 720. The first RAN node 730 then receives, trims, stores and aggregates the neighbour CQI measurement reports in a similar manner to the first UE 610, described above in steps 642-644, with respect to Figure 6a.

In examples according to the present disclosure, the first wireless device and the at least one neighbour wireless device may each comprise a memory or storage capable of, at least temporarily, storing CQI measurement reports, measured by the wireless device and reported to an associated RAN node. Table 1 below illustrates an example of the information that may be stored:

Table 1: Example CQI measurement report information stored by a wireless device

| Cell Unique Identity (CUI) | CQI Measurement | Timestamp | *Optional [Location]* | *Optional [Channel Freq.]* |
|---|---|---|---|---|
| 460-00-0011-001 | 5 | 2020-11-11 11:11 | *38.7541,-75.5447* | *1200-1220 Hz* |
| 460-00-0011-001 | 4 | 2020-11-11 11:23 | *38.7531,-75.5423* | *1200-1220 Hz* |
| 460-00-0011-002 | 6 | 2020-11-11 11:49 | *38.6424,-75.4214* | *1300-1320 Hz* |

Referring to Table 1, each row entry in the table illustrates an example CQI measurement report. Each CQI measurement report comprises information identifying the associated RAN node for which the CQI was measured. The identifying information may comprise a cell unique identity (CUI). Each entry further comprises the CQI measurement and a timestamp of when the CQI measurement was taken. Optionally, the location showing where the CQI measurement report was taken may also be stored in a CQI measurement report. Information identifying a wireless device location is not standardized functionality in 3GPP and there exist several approaches for storing such information, as discussed for example in "Predicting Channel Quality Indicators for 5G Downlink Scheduling in a Deep Learning Approach" by Yin et al. In the example of Table 1, the coordinates associated with a CQI measurement are used to identify the location of a measurement. Optionally, the channel frequency range associated with the CQI measurement may also be stored.

In one example, the CUI is the cell global identity (CGI), as defined in the 3rd Generation Project Partnership (3GPP) TS 23.003 V17.2.0. Table 1 illustrates the CGI format for a CUI. In another example, the CUI is the physical cell identity (PCI). The PCI is known to the wireless device, which identifies the cell using primary and secondary synchronization signals (P-SS and S-SS) and Physical Broadcast channel (PBCH) during attachment to the associated RAN node. From the example of Table 1, it may be inferred that a wireless device underwent a handover operation from a RAN node with the CUI 460-00-0011-001 to a RAN node with the CUI 460-00-0011-002 sometime between 11:23 and 11:49, as demonstrated by the timestamps associated with the final two CQI measurement reports of Table 1.

In some examples, the process of storing the CQI measurement reports in a memory of the UE may be continuous. In other examples the memory may also be implemented as a cyclic buffer, where older entries are overwritten by newer ones.

In some examples, if the PCI is used as the CUI, then the system may be applied only to a small area of RAN nodes, as PCIs are limited in number, with LTE systems for example including 504 PCIs. However, there can also exist mappings from PCI to CGI, and the RAN node can query an Operations Support System (OSS) of the operator for the CGI given the location and the PCI, which are known to the Ran node.

As described above, in examples according to the present disclosure, once the neighbour CQI measurements have been obtained and aggregated into a reference CQI measurement report set, the first CQI measurement may be verified using the reference CQI measurement report set. This takes place in step 560 of the method 500, and may be implemented using a rules-based, RL based or Supervised learning based process, as illustrated and described above with reference to Figures 5d-f.

In one example, the verification of step 560 may take place using a rules-based process. In such examples, the first CQI measurement report to be evaluated may be represented as a vector $CMU_{REF}$:

$$CMU_{REF} = (RBS\_Cell\_ID_{REF}, CQI_{REF}, Timestamp_{REF}, Location_{REF}, Channel_{REF})$$

Where $RBS\_Cell\_ID_{REF}$ is the first RAN node identifier associated with the first CQI measurement report, $CQI_{REF}$ is the first CQI measurement value, $Timestamp_{REF}$ is the timestamp associated with first CQI measurement report, $Location_{REF}$ is the location associated with the report and $Channel_{REF}$ is the channel frequency range for the downlink channel between the first UE and the first RAN node.

Historic CQI measurement reports, which have been stored by the first UE may also be considered in the process. The first CQI measurement report $CMU_{REF}$ and each of the historic CQI measurement reports $CMU_{REFN}$ may be represented in a list according to:

$$List_{CMUREF} = (CMU_{REF1}, ..., CMU_{REFK})$$

The reference CQI measurement report $CMU_{obs}$ set may also be represented as a list of vectors of:

$$list_{CMUMEAS} = (CMU_{obs1}, ..., CMU_{obsN})$$

Where each $CMU_{obsx}$ belonging to $list_{CMUMEAS}$, comprises a vector of:

$$CMU_{obsx} = (RBS\_Cell\_ID_{obsx}, CQI_{obsx}, Timestamp_{obsx}, Location_{obsx}, Channel_{obsx})$$

The process also considers the total number of different CQI values possible represented by $CQI_{TOTALNUM}$. In LTE networks the total number of CQI values is 15. In 5G networks, the total number of CQI values depends on the network configuration.

As described above, with respect to step 562a, verifying the first CQI measurement value using the reference CQI measurement report set may comprise determining whether each of the CQI measurement reports of the reference CQI measurement report set satisfies a similarity criterion with respect to the first CQI measurement report. To perform such a determination the process may consider each aspect of a multi element criterion in turn, following initialisation of an index parameter:

$$\text{For every } CMU_{RefCurr} \text{ in list}_{CMUREF}$$

$$\text{Initialize } temp_{INDEX} = 0$$

$$\text{For every } CMU_{obsCurr} \text{ in list}_{CMUMEAS}$$

$$\text{If } (CMU_{RefCurr}.RBS\_Cell\_ID_{refCurr} == CMU_{obsCurr}.RBS\_Cell\_ID_{obsCurr}$$

$$AND$$

$$haversine\_distance(CMU_{RefCurr}.Location_{refCurr}, \quad CMU_{obsCurr}.Location_{obsCurr}) \quad <=$$

$$acceptable\_distance \text{ } AND$$

$$(| \text{ } CMU_{RefCurr}.Channel_{refCurr}.startingFreq \text{ } - \text{ } CMU_{obsCurr}.Channel_{obsCurr}.startingFreq \text{ } |)$$

$$<= acceptable\_spectral\_difference$$

$$AND$$

$$(| \text{ } (CMU_{RefCurr}.Channel_{refCurr}.endingFreq \text{ } - \text{ } CMU_{RefCurr}.Channel_{refCurr}.startingFreq) \text{ } -$$

$$(CMU_{obsCurr}.Channel_{obsCurr}.endingFreq \text{ } - \text{ } CMU_{obsCurr}.Channel_{obsCurr}.startingFreq) \text{ } |)<=$$

$$acceptable\_bandwidth\_difference)$$

Where the first criterion element provides an indication that the first CQI measurement report and the considered neighbour CQI measurement report have matching cells, *acceptable_distance* is an operator specified threshold limit for the Haversine distance between the first CQI measurement report and the considered neighbour CQI measurement report, *acceptable_spectral_difference* is a threshold limit (which may be operator specified) for the channel frequency difference associated with the first CQI measurement report and the considered neighbour CQI measurement report, and *acceptable_bandwidth_difference* defines an acceptable range between the bandwidth of the frequency channels associated with the first CQI measurement report and the considered neighbour CQI measurement report.

Following the above determination, the verification node may have identified at least one neighbour CQI measurement that satisfies the similarity criterion. Thus, as described above with respect to step 566a, the verification may further comprise comparing the first CQI measurement value to the CQI measurement value of each of the neighbour CQI measurement reports of the reference CQI measurement report set that satisfies the similarity criterion. To perform such comparison, the algorithm may perform the action:

$$temp_{INDEX} = (temp_{INDEX} + (|CMU_{RefCurr}.CQI_{RefCurr} - CMU_{obsCurr}.CQI_{obsCurr}|))/2$$

Where $temp_{INDEX}$ is initiated to 0 and provides an indication of how the CQI measurement of the first CQI measurement report compares to the CQI measurement of the considered neighbour CQI measurement report (which has been determined in the above process to fulfil the similarity criterion). The $temp_{INDEX}$ is computed for the first CQI measurement report against each other CQI measurement report which satisfies the similarity criterion, being incremented each time a new neighbour CSI measurement is considered.

Following the comparison, as described above with respect to step 568a, the verification further comprises determining a reliability of the first CQI measurement value based on the comparison. To perform such determination, the process computes:

$$verification_{INDEX} = (verification_{INDEX} + temp_{INDEX})/2$$

$$verification_{INDEX} = 1 - (verification_{INDEX} / CQI_{TOTALNUM})$$

Where the $verification_{INDEX}$ provides an indication of the reliability of the CQI measurement value of the first CQI measurement report. The $verification_{INDEX}$ is a value that is normalized to between 0 and 1, and indicates how reliable the CQI measurement is. The closer the $verification_{INDEX}$ is to 1 the more reliable the measurement is considered to be. The verification node may for exmaple compare the $verification_{INDEX}$ to a suitable threshold to determine if the CQI value reported by the first UE is reliable.

In another example, and as further described above, the verification of the first CQI measurement value using the reference CQI measurement report set may comprise the use of a ML approach. The examples below present two such ML approaches one based on supervised learning (as illustrated in Figure 5f) and one based on a reinforcement learning (RL) approach (as illustrated in Figure 5e).

In some examples, the supervised learning approach may produce a faster verification. However, the supervised learning approach requires the existence of a dataset for training and verification of the model. In order to provide such data, some UEs should be known to the verification node, or to a model repository or other entity responsible for training and maintaining one of more ML models, to produce real or inaccurate/fake CQI for the training and verification, or alternatively there may exist some third party indicating whether the CQI reported is accurate or inaccurate. An RL approach, on the other hand, may be slower, but does not require the existence of a training dataset. Rather, an RL algorithm explores all possible actions (measures of reliability) to be taken based on the reported CQI values of the first wireless device and neighbor wireless device(s), and learns over time to prioritize some over the others by means of a reward function that rewards correct verification of a CSI measurement report.

The following example considers the verification of the first CQI measurement value using the reference CQI measurement report via an RL approach, as illustrated in Figure 5e.

It will be appreciated that in RL applications, an RL agent is given a state of an environment and produces an action for execution in that environment. This transitions the environment to a new state and the agent receives a reward for the action dictated by a reward function. The reward is often a scalar quantity, which is provided to the agent and determined on the basis of the new state that the environment has been transitioned to by execution of the selected action. A new state associated with a positive outcome may result in a higher reward whereas a new state associated with a negative outcome may result in a lower reward.

The determination of whether an outcome is positive or negative may be based on assessing key performance indicators (KPIs) relevant to the environment. Through trial-and-error, the RL agent strives to learn the optimal policy for every state in the environment, meaning the action that yields the highest reward. Formally, this means that RL is parametrized by a state, action and reward.

As described above with reference to step 561b, using the RL approach for the verification may comprise representing a state of the environment as the first CQI measurement report and the reference CQI measurement report set. With reference to the above discussion of rules-based verification, the state of the environment may thus comprise the information found in the $CMU_{REF}$ vector for the first UE and the $CMU_{Obs}$ vectors for the neighbour UE(s) obtained by the verification node.

RL based verification may further comprise, as described above with respect to steps 562b, 563b, applying a policy to map the state of the environment to an action comprising a measure of reliability of the first CQI measurement value, and providing the measure of reliability to the first RAN node. In some examples, the measure of reliability may be a binary indicating whether the reported CQI is reliable or not. In other examples, the measure of reliability may be expressed as a scale for example, a scale of 1 to 5 where 1 represents "not reliable at all" and 5 represents "absolutely reliable". On the basis of the received measure of reliability and the first CQI measurement, the RAN node may then select a suitable MCS value for the first UE. For example, if the measure of reliability is high, the first RAN node may select the MCS corresponding to the received first CQI measurement value. If the measure of reliability is low, the RAN node may select a different MSC value, or may ask the UE to provide an updated CQI measurement.

The verification may further comprise, as described above with respect to steps 566b, 567b, obtaining from the communication network a value of a reward function based on at least one performance parameter of the communication network and updating the policy for mapping the state of the environment to an action (reliability measure) on the basis of the obtained reward function value. The value of the reward function indicates how successful the measure of reliability provided by the RL policy was. If the measure of reliability was correct, this will have enabled the RAN node to select a suitable MCS value and network performance will have improved or remained stable. If the measure of reliability provided by the RL policy was incorrect, the RAN node will likely not have selected a suitable MCS value, and network performance, at least with respect to the first UE, will have degraded.

The reward may be based on UE-specific KPIs that relate to CQI (and specifically the modulation scheme chosen on the basis of the CQI). 3GPP TS 23.003 V17.2.0 provides a list of such KPIs that may relate to mobility (rate of successful handovers), integrity (total throughput on downlink versus requested throughput), accessibility (radio rate of successful radio resource control session establishment and rate of radio bearer establishment) and retainability (call drop rate and call setup complete rate). In addition, other network KPIs such as packet drops, jitter and latency can be used.

In one example, the reward function may be based on a set of predefined thresholds of maximum expected latency, jitter, packet drop as well as maximum throughput per UE compared to the guaranteed bit rate (GBR) that can be configured by a network operator. Weights associated with the KPIs can also be configured by the network operator, and may be used for indicating which of the KPIs carries the greater importance. A reward r may thus be dictated by a function:

$$r = (w_{lat} \cdot latency_{ceiling}/latency_{average}) + (w_{jit} \cdot jitter_{ceiling}/jitter_{average}) +$$

$$(w_{pd} \cdot packetdrop_{ceiling}/packetdrop_{average}) + (w_{thr} \cdot throughput_{average}/throughput_{GBR})$$

Where $w_{mobility}$, $w_{jit}$, $w_{pd}$ and $w_{thr}$ are the weights associated with the different KPIs of latentcy, jitter, packetdrop rates and throughput, respectively. Where $w_{mobility} + w_{jit} + w_{pd} + w_{thr} = 1$.

In another example, the reward function may be based on KPIs from 3GPP TS 23.003 V17.2.0. The KPIs from the TS may be relevant to the whole mobile network and not solely for the first UE. For example, a reward $r$ may thus be dictated by a function:

$$r = (w_{mobility} \cdot \frac{handover_{succ}}{handover_{total}}) + (w_{integrity} \cdot \frac{thr_{downlink}}{thr_{expected}}) + (w_{accessibility} \cdot$$

$$(\frac{RRCConnect_{succ}}{2 \cdot RRCConnect_{total}} + \frac{ERAB_{succ}}{2 \cdot ERAB_{total}})) + (w_{retainability} \cdot (\frac{call_{drop}}{2 \cdot call_{total}} + \frac{callSetup_{complete}}{2 \cdot callSetup_{total}}))$$

Based on the produced reward, the RL agent may update the policy for mapping the state of the environment to an action in the form of a reliability measure for the first CSI measurement.

As further described above, in another example, the verification of the first CQI measurement value using the reference CQI measurement report set may comprise the use of a supervised learning approach, as illustrated in Figure 5f.

It will be appreciated that data is required in order to train and to test a model in a supervised learning process. In examples according to the present disclosure, this data comprises not only input data to train the model, but also output data to determine an indication of a reliability of the reported CQI.

In one example, a plurality of UEs known to a network operator may intentionally report realistic or unrealistic CQI values during a training phase to train the model to predict a correct CSI measurement based on characteristics associated with a UE such as UE type, location and speed.

In another example, the verification node can delegate the first CQI measurement report to a third party to verify the validity of the reported data using a trained model. In some examples, the third party may comprise another network operator or a RAN node of the same operator that has a more extensively trained agent.

In one example, the model may receive the information comprised in the vectors $CMU_{REF}$ and $CMU_{obs}$ as inputs to the model based on which a predicted CSI measurement value is output from the model.

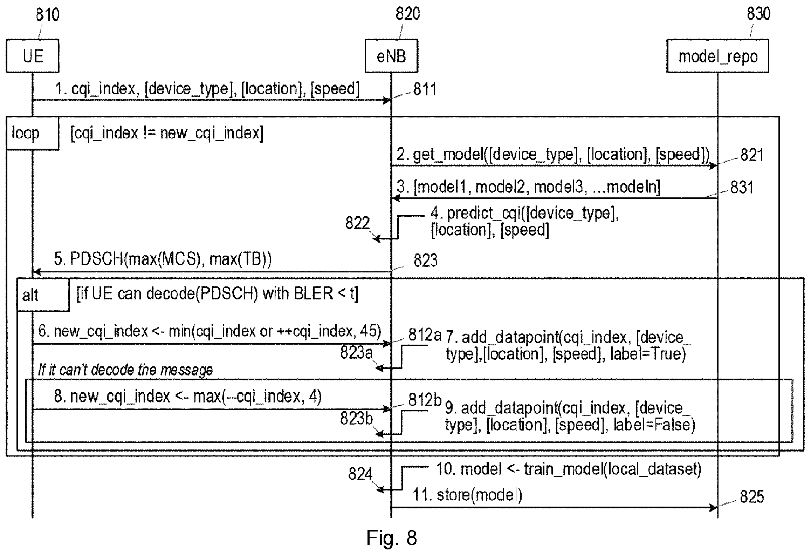

**Figure 8** is a signalling diagram 800 illustrating messages transmitted between a first UE 810, a RAN node 820 and a model repository 830. Signalling diagram 800 illustrates an example in which the verification node is instantiated in the first RAN node 820, and the first RAN node uses a trained ML model to verify the first CQI measurement value using the reference CQI measurement report set, as described with reference to step 560c. However, in other examples, in which the verification node is instantiated in the first wireless device 810, first UE 810 may perform corresponding actions to the first RAN node 820 described below with respect to Figure 8, to verify the first CQI measurement value using the reference CQI measurement report set, as described with reference to step 560c.

In a first step 811, the first UE 810 transmits a CQI index to the first RAN node 820, which comprises first CQI measurement report, and be accompanied by the first UE type, location and speed. In other examples the first UE type, location and speed may not be transmitted to the first RAN node 820 and the first RAN node 820 may determine such information. For example, the first RAN node 820 may determine the device type based on the MAC address of the first UE 810. The first RAN node 820 may determine the location of the first UE 810 based on triangulation of RRCMeasurementReport messages, which measure the signal to interference and noise ratio (SINR) between the first UE 810 and the first RAN node 820. The first RAN node 820 may determine the speed of the first UE 810 by monitoring the difference in SINR between two RRCMeasurementReport messages and then calculating the distance over time for these measurements.

In step 821, the first RAN node 820 may consult a model repository 830 for a trained model to predict a CQI measurement value based on for example the first UE type, location and speed. In one example, the model repository 830 may be external to the first RAN node 820 and may be hosted over the top (OTT). The first RAN node may thus transmit a request for the trained model to the model repository 830 for the request. In another example, the model repository may be internal to the first RAN node 820 and hosted at the first RAN node 820. Each model in the repository may be annotated with tags per device type, location area (bounding box) and the speed of the relevant UE when the samples that trained each model were collected.

In step 831, one or more trained models may be obtained from the model repository 830 by the first RAN node 820. In the example of Figure 8, an ensemble of models is obtained from the model repository 830 and the predicted CQI measurement value output from each of these models may be combined to produce a predicted CQI measurement value result. As described above, said models may be obtained based on one or more of first UE 810 characteristics such as the first UE type, location and speed.

In step 822, the first RAN node 820 uses the obtained model(s) to predict a CQI value based on an input tensor obtained from the information of the first CQI measurement report and the reference CQI measurement report set (obtained by the RAN node as discussed above). Such information may comprise device type, location and speed, which may be comprised in the first CQI measurement report and the reference CQI measurement report set.

The predicted CQI measurement value may be associated with a probability distribution indicating a certainty of the predicted CQI value. In one example, the probability distribution may be obtained by applying a logit function to the output of the trained model. In one example, the logit function may produce the probability distribution as presented in Table 2 below:

Table 2: Example logit probability distribution for predicted CQI values

| Output class (CQI) | Probability (softmax(logit(output)) |
|---|---|
| 1 | 50% |
| 2 | 20% |
| 3 | 10% |
| 4 | 2% |
| 5 | 2% |
| 6 | 2% |
| 7 | 5% |
| 8 | 2% |
| 9 | 1% |
| 10 | 1% |
| 11 | 1% |
| 12 | 1% |
| 13 | 1% |
| 14 | 1% |
| 15 | 1% |

Based on the predicted CQI value, associated probability distribution and the first CQI measurement value measured by the first UE 810, a final CQI measurement value may be obtained by the first RAN node 820. For example, the first RAN node may select as final CQI measurement the predicted CQI value (i.e., the value having the highest probability distribution). In another example, if the probability distribution is relatively flat, indicating several values with a similarly high probability, and one of those values corresponds to the first CQI measurement value, then the first CQI measurement value may be selected as the final CQI measurement value. Where there is disagreement between the predicted CQI measurement value and the first CQI measurement value, this may be recorded and considered when retraining the model. Retraining may take place whenever sufficient new data and resources for retraining are available. For example, at night or during other times of low network use, a RAN node may have space CPU cycles available for model retraining. This is discussed in further detail with reference to steps 823a and 823b below. The final CQI measurement value may be used to establish the downlink channel between the first RAN node 820 and the first UE 810.

In step 823, the first RAN node 820 then selects the optimal modulation scheme and transport blocks for the downlink channel between the first UE 810 and first RAN node 820, based on the final CQI measurement.

The first UE 810 then seeks to decode data transmitted on the physical channel with the selected modulation scheme, and determines whether or not that data can be decoded with a block error rate (BLER) that is lower than a threshold. If the first UE 810 can decode the data, the first UE 810 may settle on the received modulation scheme or, alternatively, in step 812a the first UE 810 may instead report a higher order CQI measurement and request a higher order modulation scheme. In step 823a, the first RAN node 820 can thus tag the modulation scheme selection of CQI for that type of device, for the location and speed as a correct guess (label=True) that the first UE 810 can decode the data. If the first UE 810 reports a higher order CQI measurement and requests a higher order modulation scheme, the first RAN node may log a new data point indicating that a higher order modulation scheme can be used when the first UE 810 reports a similar CQI measurement report to the first CQI measurement report in a subsequent prediction.

If the first UE 810 cannot decode the data on the first downlink channel using the selected modulation scheme, in step 812b, the first UE reports a lower order CQI measurement and requests a lower order modulation scheme. The first RAN node 820 thus logs a new data point that the predicted CQI measurement was incorrect (label=False).

In step 824 the first RAN node updates the model based on the logged data points and in step 825, returns the model to the model repository 830 for storage. Alternatively the RAN node may provide the new data points to the model repository for retraining of the model.

As discussed above, the methods 400 and 500 may be performed by a verification node, and the present disclosure provides a verification node that is adapted to perform any or all of the steps of the above discussed methods. The verification node may be a physical or virtual node, and may for example comprise a virtualised function that is running in a cloud, edge cloud or fog deployment. The verification node may for example comprise or be instantiated in any part of a logical core network node, network management centre, network operations centre, Radio Access node etc. or a wireless dveice. Any such communication network node may itself be divided between several logical and/or physical functions, and any one or more parts of the verification node may be instantiated in one or more logical or physical functions of a communication network node.

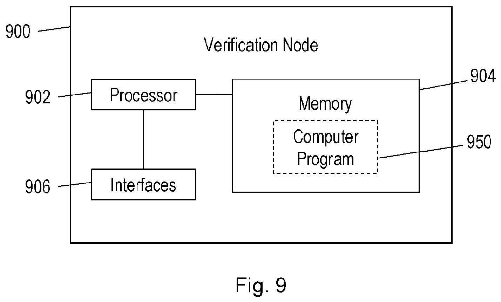

**Figure 9** is a block diagram illustrating an example verification node 900 which may implement the method 400 and/or 500, as illustrated in Figures 4 and 5a-5f, according to examples of the present disclosure, for example on receipt of suitable instructions from a computer program 950. Referring to Figure 9, the verification node 900 comprises a processor or processing circuitry 902, and may comprise a memory 904 and interfaces 906. The processing circuitry 902 is operable to perform some or all of the steps of the method 400 and/or 500 as discussed above with reference to Figures 4 and 5a-5f. The memory 904 may contain instructions executable by the processing circuitry 902 such that the verification node 900 is operable to perform some or all of the steps of the method 400 and/or 500, as illustrated in Figures 4 and 5a-5f. The instructions may also include instructions for executing one or more telecommunications and/or data communications protocols. The instructions may be stored in the form of the computer program 950. In some examples, the processor or processing circuitry 902 may include one or more microprocessors or microcontrollers, as well as other digital hardware, which may include digital signal processors (DSPs), special-purpose digital logic, etc. The processor or processing circuitry 902 may be implemented by any type of integrated circuit, such as an Application Specific Integrated Circuit (ASIC), Field Programmable Gate Array (FPGA) etc. The memory 904 may include one or several types of memory suitable for the processor, such as read-only memory (ROM), random-access memory, cache memory, flash memory devices, optical storage devices, solid state disk, hard disk drive etc. The verification node 900 may further comprise interfaces 906 which may be operable to facilitate communication with a wireless device, and/or with other communication network nodes over suitable communication channels.

Examples according to the present disclosure thus present a verification method which can verify a reported CQI measurement based on neighbour CQI measurements that have been previously reported. Such examples result in bandwidth savings, as the provision of correct CSI measurement values means that retransmissions on the downlink channel from the network towards the UE are reduced. Retransmissions occur due to an incorrect choice of a modulation scheme, as result a of a reported CQI that does not match the current conditions of the downlink channel.

Examples according to the present disclosure further facilitate accurate CQI reporting for devices with chipsets that may calculate CQI inaccurately e.g. due to software errors. In such examples, the reported CQI measurement may be identified as an anomaly and a more appropriate CQI measurement value may be determined from the neighbour CQI measurements.

Examples according to the present disclosure can result in resource savings of a RAN node as the wireless device may perform the processing and verification of the accuracy of the CQI measurement. Examples according to the present disclosure further leverage the experience of multiple wireless devices to continuously update models for determining CQI reports thus increasing the performance of the trained model in terms of accuracy and generalization.

The methods of the present disclosure may be implemented in hardware, or as software modules running on one or more processors. The methods may also be carried out according to the instructions of a computer program, and the present disclosure also provides a computer readable medium having stored thereon a program for carrying out any of the methods described herein. A computer program embodying the disclosure may be stored on a computer readable medium, or it could, for example, be in the form of a signal such as a downloadable data signal provided from an Internet website, or it could be in any other form.

It should be noted that the above-mentioned examples illustrate rather than limit the disclosure, the scope of which is defined by the appended claims. The word "comprising" does not exclude the presence of elements or steps other than those listed in a claim, "a" or "an" does not exclude a plurality, and a single processor or other unit may fulfil the functions of several units recited in the claims. Any reference signs in the claims shall not be construed so as to limit their scope.

**Claims**

**1.** A method (400) for verifying a Channel Quality Indicator, CQI, measurement performed by a first wireless device in a communication network, wherein the communication network comprises a Radio Access Network, RAN, the method, performed by a verification node, comprising:

obtaining a first CQI measurement report comprising a first CQI measurement value of a measurement performed by the first wireless device for a first downlink channel between a first RAN node and the first wireless device (420);
**characterised by**:
identifying at least one neighbour wireless device to the first wireless device (430);
obtaining at least one neighbour CQI measurement report from the at least one neighbour wireless device (440);
aggregating the at least one neighbour CQI measurement report into a reference CQI measurement report set (450); and
verifying the first CQI measurement value using the reference CQI measurement report set (460).

2. The method according to claim 1, further comprising:
providing a result of the verification to at least one of the first wireless device or the first RAN node, wherein each of the first wireless device and the first RAN node are operable to configure a Radio Access Network operation according to a result of the verification (462).

3. The method according to claim 1 or 2, wherein identifying at least one neighbour wireless device to the first wireless device comprises identifying the at least one neighbour wireless device from a candidate set of wireless devices based on one or more criteria (432).

4. The method according to any preceding claim wherein the at least one neighbour CQI measurement report comprises a neighbour CQI measurement value of a measurement performed by the at least one neighbour wireless device on a downlink channel between the first RAN node and the at least one neighbour wireless device (442).

5. The method according to any preceding claim further comprising:

obtaining historic CQI measurement reports from the first wireless device (553); and
aggregating the historic CQI measurement reports into the reference CQI measurement report set (556).

6. The method according to any preceding claim wherein each of the at least one neighbour CQI measurement reports comprise a timestamp, and wherein aggregating the at least one neighbour CQI measurement reports into a reference CQI measurement report set comprises:

assessing whether the timestamp of each of the at least one neighbour CQI measurement reports is within a reference time window (551); and
aggregating into the reference CQI measurement report set only those neighbour CQI measurement reports comprising a timestamp that is within the reference time window (552).

7. The method according to any preceding claim wherein the first CQI measurement report comprises a first CQI measurement value and at least one of: a location of the first wireless device; an identifier of the first RAN node; and a channel frequency range of the first downlink channel (422).

8. The method according to any preceding claim wherein verifying the first CQI measurement value using the reference CQI measurement report set comprises:

determining whether each of the CQI measurement reports of the reference CQI measurement report set satisfies a similarity criterion with respect to the first CQI measurement report (562a);
comparing the first CQI measurement value to the CQI measurement value of each of the neighbour CQI measurement reports of the reference CQI measurement report set that satisfies the similarity criterion (566a); and
determining a reliability of the first CQI measurement value based on the comparison (568a).

9. The method according to any of claims 1-7 wherein verifying the first CQI measurement value based on the aggregated CQI measurement report set comprises:
using a Reinforcement Learning, RL, process to verify the first CQI measurement value by:

representing a state of an RL environment as the first CQI measurement report and the reference CQI measurement report set (561b);

applying a policy to map the state of the environment to an action comprising a measure of reliability of the first CQI measurement value (562b);

providing the measure of reliability to the first RAN node (563b);

obtaining from the communication network a value of a reward function based on at least one performance parameter of the communication network (565b); and

updating the policy for mapping the state of the environment to an action on the basis of the obtained reward function value (567b).

10. The method according to any of claims 1-7 wherein verifying the first CQI measurement value using the reference CQI measurement report set comprises:

generating an input tensor from the first CQI measurement report and the reference CQI measurement report set (562c);

inputting the generated input tensor to a trained Machine Learning, ML, model (563c); and

obtaining, as an output of the trained ML model, a predicted CQI measurement value of the first downlink channel for the first wireless device and a measure of probability that the predicted value is correct (564c).

11. The method according to any preceding claim wherein the verification node is instantiated in the first wireless device or in the first RAN node..

12. The method according to claim 11 wherein identifying at least one neighbour wireless device to the first wireless device comprises:

discovering the at least one neighbour wireless device using at least one of device-to-device sidelink communication or short-range wireless communication (532).

13. The method according to any preceding claim further comprising:

on occurrence of a trigger, initiating a CQI measurement process to cause the first wireless device to generate the first CQI measurement report (410).

14. A verification node (900) for verifying a CQI measurement value, the verification node comprising processing circuitry (902) configured to:

obtain a first CQI measurement report comprising a first CQI measurement value of a measurement performed by the first wireless device for a first downlink channel between a RAN node and the first wireless device; **characterised in that** the processing circuitry is further configured to:

identify at least one neighbour wireless device to the first wireless device;

obtain at least one neighbour CQI measurement report from the at least one neighbour wireless device;

aggregate the at least one neighbour CQI measurement reports into a reference CQI measurement report set; and

verify the first CQI measurement value using the reference CQI measurement report set.

15. A computer program product comprising a computer readable medium, the computer readable medium having computer readable code embodied therein which, on execution by a computer or processor, causes the computer or processor to perform the method as claimed in any one of claims 1 to 13.


**Patentansprüche**

1. Verfahren (400) zum Überprüfen einer Kanalqualitätsindikatormessung, CQI-Messung, das durch eine erste drahtlose Vorrichtung in einem Kommunikationsnetz durchgeführt wird, wobei das Kommunikationsnetz ein Funkzugangsnetz, RAN, umfasst, wobei das Verfahren, das durch einen Überprüfungsknoten durchgeführt wird, Folgendes umfasst: Erlangen eines ersten CQI-Messberichts, umfassend einen ersten CQI-Messwert einer Messung, die durch die erste drahtlose Vorrichtung für einen ersten Downlink-Kanal zwischen einem ersten RAN-Knoten und der ersten drahtlosen Vorrichtung durchgeführt wird (420); **gekennzeichnet durch**:

Identifizieren mindestens einer benachbarten drahtlosen Vorrichtung zu der ersten drahtlosen Vorrichtung (430);

Erlangen mindestens eines benachbarten CQI-Messberichts von der mindestens einen benachbarten drahtlosen Vorrichtung (440);
Aggregieren des mindestens einen benachbarten CQI-Messberichts in einen Referenz-CQI-Messberichtsatz (450); und
Überprüfen des ersten CQI-Messwerts unter Verwendung des Referenz-CQI-Messberichtsatzes (460).

**2.** Verfahren nach Anspruch 1, ferner umfassend:
Bereitstellen eines Ergebnisses der Überprüfung an mindestens eines der ersten drahtlosen Vorrichtung oder des ersten RAN-Knotens, wobei jedes der ersten drahtlosen Vorrichtung und des ersten RAN-Knotens dazu betriebsfähig ist, einen Funkzugangsnetzvorgang gemäß einem Ergebnis der Überprüfung zu konfigurieren (462).

**3.** Verfahren nach Anspruch 1 oder 2, wobei das Identifizieren mindestens einer benachbarten drahtlosen Vorrichtung zu der ersten drahtlosen Vorrichtung Identifizieren der mindestens einen benachbarten drahtlosen Vorrichtung aus einem in Betracht kommenden Satz drahtloser Vorrichtungen basierend auf einem oder mehreren Kriterien umfasst (432).

**4.** Verfahren nach einem der vorhergehenden Ansprüche, wobei der mindestens eine benachbarte CQI-Messbericht einen benachbarten CQI-Messwert einer Messung umfasst, die durch die mindestens eine benachbarte drahtlose Vorrichtung an einem Downlink-Kanal zwischen dem ersten RAN-Knoten und der mindestens einen benachbarten drahtlosen Vorrichtung durchgeführt wird (442) .

**5.** Verfahren nach einem der vorhergehenden Ansprüche, ferner umfassend:

Erlangen historischer CQI-Messberichte von der ersten drahtlosen Vorrichtung (553); und
Aggregieren der historischen CQI-Messberichte in den Referenz-CQI-Messberichtsatz (556).

**6.** Verfahren nach einem der vorhergehenden Ansprüche, wobei jeder des mindestens einen benachbarten CQI-Messberichts einen Zeitstempel umfasst und wobei das Aggregieren des mindestens einen benachbarten CQI-Messberichts in einen Referenz-CQI-Messberichtsatz Folgendes umfasst:

Beurteilen, ob der Zeitstempel jedes des mindestens einen benachbarten CQI-Messberichts innerhalb eines Referenzzeitfensters liegt (551); und
Aggregieren, in den Referenz-CQI-Messberichtsatz, nur jener benachbarten CQI-Messberichte, die einen Zeitstempel umfassen, der innerhalb des Referenzzeitfensters liegt (552).

**7.** Verfahren nach einem der vorhergehenden Ansprüche, wobei der erste CQI-Messbericht einen ersten CQI-Messwert und mindestens eines von Folgendem umfasst: einem Ort der ersten drahtlosen Vorrichtung; einer Kennung des ersten RAN-Knotens; und einem Kanalfrequenzbereich des ersten Downlink-Kanals (422).

**8.** Verfahren nach einem der vorhergehenden Ansprüche, wobei das Überprüfen des ersten CQI-Messwerts unter Verwendung des Referenz-CQI-Messberichtsatzes Folgendes umfasst:

Bestimmen, ob jeder der CQI-Messberichte des Referenz-CQI-Messberichtsatzes ein Ähnlichkeitskriterium in Bezug auf den ersten CQI-Messbericht erfüllt (562a);
Vergleichen des ersten CQI-Messwerts mit dem CQI-Messwert jedes der benachbarten CQI-Messberichte des Referenz-CQI-Messberichtsatzes, der das Ähnlichkeitskriterium erfüllt (566a); und
Bestimmen einer Zuverlässigkeit des ersten CQI-Messwerts basierend auf dem Vergleich (568a).

**9.** Verfahren nach einem der Ansprüche 1-7, wobei das Überprüfen des ersten CQI-Messwerts basierend auf dem aggregierten CQI-Messberichtsatz Folgendes umfasst:
Verwenden eines Prozesses bestärkenden Lernens, RL, um den ersten CQI-Messwert durch Folgendes zu überprüfen:

Darstellen eines Zustands einer RL-Umgebung als den ersten CQI-Messbericht und den Referenz-CQI-Messberichtsatz (561b);
Anwenden einer Richtlinie, um den Zustand der Umgebung auf einer Handlung abzubilden, umfassend ein Zuverlässigkeitsausmaß des ersten CQI-Messwerts (562b);
Bereitstellen des Zuverlässigkeitsausmaßes an den ersten RAN-Knoten (563b);
Erlangen, von dem Kommunikationsnetz, eines Wertes einer Belohnungsfunktion basierend auf mindestens einem Leistungsparameter des Kommunikationsnetzes (565b); und
Aktualisieren der Richtlinie zum Abbilden des Zustands der Umgebung auf einer Handlung basierend auf dem erlangten Belohnungsfunktionswert (567b).

10. Verfahren nach einem der Ansprüche 1-7, wobei das Überprüfen des ersten CQI-Messwerts unter Verwendung des Referenz-CQI-Messberichtsatzes Folgendes umfasst: Erzeugen eines Eingabetensors aus dem ersten CQI-Messbericht und dem Referenz-CQI-Messberichtsatz (562c);

Eingeben des erzeugten Eingabetensors in ein trainiertes Modell maschinellen Lernens, ML, (563c); und
Erlangen, als eine Ausgabe des trainierten ML-Modells, eines vorhergesagten CQI-Messwerts des ersten Downlink-Kanals für die erste drahtlose Vorrichtung und eines Wahrscheinlichkeitsausmaßes, dass der vorhergesagte Wert korrekt ist (564c).

11. Verfahren nach einem der vorhergehenden Ansprüche, wobei der Überprüfungsknoten in der ersten drahtlosen Vorrichtung oder in dem ersten RAN-Knoten instanziiert wird.

12. Verfahren nach Anspruch 11, wobei das Identifizieren mindestens einer benachbarten drahtlosen Vorrichtung zu der ersten drahtlosen Vorrichtung Folgendes umfasst:
Entdecken der mindestens einen benachbarten drahtlosen Vorrichtung unter Verwendung mindestens einer von einer Vorrichtung-zu-Vorrichtung-Sidelink-Kommunikation oder einer drahtlosen Nahbereichskommunikation (532).

13. Verfahren nach einem der vorhergehenden Ansprüche, ferner umfassend:
bei Auftreten eines Auslösers, Initiieren eines CQI-Messprozesses, um die erste drahtlose Vorrichtung dazu zu veranlassen, den ersten CQI-Messbericht zu erzeugen (410).

14. Überprüfungsknoten (900) zum Überprüfen eines CQI-Messwerts, wobei der Überprüfungsknoten eine Verarbeitungsschaltung (902) umfasst, die zu Folgendem konfiguriert ist:

Erlangen eines ersten CQI-Messberichts, umfassend einen ersten CQI-Messwert einer Messung, die durch die erste drahtlose Vorrichtung für einen ersten Downlink-Kanal zwischen einem RAN-Knoten und der ersten drahtlosen Vorrichtung durchgeführt wird;
**dadurch gekennzeichnet, dass** die Verarbeitungsschaltung ferner zu Folgendem konfiguriert ist:

Identifizieren mindestens einer benachbarten drahtlosen Vorrichtung zu der ersten drahtlosen Vorrichtung;
Erlangen mindestens eines benachbarten CQI-Messberichts von der mindestens einen benachbarten drahtlosen Vorrichtung;
Aggregieren des mindestens einen benachbarten CQI-Messberichts in einen Referenz-CQI-Messberichtsatz; und
Überprüfen des ersten CQI-Messwerts unter Verwendung des Referenz-CQI-Messberichtsatzes.

15. Computerprogrammprodukt, umfassend ein computerlesbares Medium, wobei das computerlesbare Medium einen darin verkörperten computerlesbaren Code aufweist, der bei Ausführung durch einen Computer oder einen Prozessor den Computer oder den Prozessor dazu veranlasst, das Verfahren nach einem der Ansprüche 1 bis 13 durchzuführen.

**Revendications**

1. Procédé (400) de vérification d'une mesure d'indicateur de qualité de canal, CQI, réalisé par un premier dispositif sans fil dans un réseau de communication, dans lequel le réseau de communication comprend un réseau d'accès radio, RAN, le procédé, réalisé par un nœud de vérification, comprend :
l'obtention d'un premier rapport de mesure CQI comprenant une première valeur de mesure CQI d'une mesure réalisée par le premier dispositif sans fil pour un premier canal de liaison descendante entre un premier nœud RAN et le premier dispositif sans fil (420) ; **caractérisé par** :

l'identification d'au moins un dispositif sans fil voisin du premier dispositif sans fil (430) ;
l'obtention d'au moins un rapport de mesure CQI voisin à partir de l'au moins un dispositif sans fil voisin (440) ;
l'agrégation de l'au moins un rapport de mesure CQI voisin dans un ensemble de rapports de mesure CQI de référence (450) ; et
la vérification de la première valeur de mesure CQI à l'aide de l'ensemble de rapports de mesure CQI de référence (460).

2. Procédé selon la revendication 1, comprenant en outre :
la fourniture d'un résultat de la vérification à au moins l'un du premier dispositif sans fil ou du premier nœud RAN, chacun du premier dispositif sans fil et du premier nœud RAN étant utilisable pour configurer une opération de réseau d'accès radio selon un résultat de la vérification (462).

3. Procédé selon la revendication 1 ou 2, dans lequel l'identification d'au moins un dispositif sans fil voisin du premier dispositif sans fil comprend l'identification de l'au moins un dispositif sans fil voisin à partir d'un ensemble candidat de dispositifs sans fil sur la base d'un ou plusieurs critères (432).

4. Procédé selon l'une quelconque des revendications précédentes, dans lequel l'au moins un rapport de mesure CQI voisin comprend une valeur de mesure CQI voisin d'une mesure réalisée par l'au moins un dispositif sans fil voisin sur un canal de liaison descendante entre le premier nœud RAN et l'au moins un dispositif sans fil voisin (442).

5. Procédé selon l'une quelconque des revendications précédentes, comprenant en outre :

l'obtention de rapports de mesure CQI historiques à partir du premier dispositif sans fil (553) ; et
l'agrégation des rapports de mesure CQI historiques dans l'ensemble de rapports de mesure CQI de référence (556).

6. Procédé selon l'une quelconque des revendications précédentes, dans lequel chacun de l'au moins un rapport de mesure CQI voisin comprend un horodatage, et dans lequel l'agrégation de l'au moins un rapport de mesure CQI voisin dans un ensemble de rapports de mesure CQI de référence comprend :

l'évaluation si l'horodatage de chacun de l'au moins un rapport de mesure CQI voisin se situe dans une fenêtre temporelle de référence (551) ; et
l'agrégation dans l'ensemble de rapports de mesure CQI de référence uniquement des rapports de mesure CQI voisins comprenant un horodatage qui se situe dans la fenêtre temporelle de référence (552).

7. Procédé selon l'une quelconque des revendications précédentes, dans lequel le premier rapport de mesure CQI comprend une première valeur de mesure CQI et au moins l'un des éléments suivants : un emplacement du premier dispositif sans fil ; un identifiant du premier nœud RAN ; et une plage de fréquences de canal du premier canal de liaison descendante (422).

8. Procédé selon l'une quelconque des revendications précédentes, dans lequel la vérification de la première valeur de mesure CQI à l'aide de l'ensemble de rapports de mesure CQI de référence comprend :

la détermination si chacun des rapports de mesure CQI de l'ensemble de rapports de mesure CQI de référence satisfait un critère de similarité par rapport au premier rapport de mesure CQI (562a) ;
la comparaison de la première valeur de mesure CQI à la valeur de mesure CQI de chacun des rapports de mesure CQI voisins de l'ensemble de rapports de mesure CQI de référence qui satisfait le critère de similarité (566a) ; et
la détermination d'une fiabilité de la première valeur de mesure CQI sur la base de la comparaison (568a).

9. Procédé selon l'une quelconque des revendications 1 à 7, dans lequel la vérification de la première valeur de mesure CQI sur la base de l'ensemble de rapports de mesure CQI agrégés comprend :
l'utilisation d'un processus d'apprentissage par renforcement, RL, pour vérifier la première valeur de mesure CQI en :

représentant un état d'un environnement RL en tant que premier rapport de mesure CQI et en tant qu'ensemble de rapports de mesure CQI de référence (561b) ;
appliquant une politique pour mapper l'état de l'environnement à une action comprenant une mesure de fiabilité de la première valeur de mesure CQI (562b) ;
fournissant la mesure de fiabilité au premier nœud RAN (563b) ;
obtenant du réseau de communication une valeur d'une fonction de récompense basée sur au moins un paramètre de performance du réseau de communication (565b) ; et

mettant à jour la politique pour mapper l'état de l'environnement à une action sur la base de la valeur de fonction de récompense obtenue (567b).

**10.** Procédé selon l'une quelconque des revendications 1 à 7, dans lequel la vérification de la première valeur de mesure CQI à l'aide de l'ensemble de rapports de mesure CQI de référence comprend :

la génération d'un tenseur d'entrée à partir du premier rapport de mesure CQI et de l'ensemble de rapports de mesure CQI de référence (562c) ;

l'entrée du tenseur d'entrée généré dans un modèle d'apprentissage automatique, ML, entraîné (563c) ; et

l'obtention, en tant que sortie du modèle ML entraîné, d'une valeur de mesure CQI prédite du premier canal de liaison descendante pour le premier dispositif sans fil et d'une mesure de probabilité que la valeur prédite soit correcte (564c).

**11.** Procédé selon l'une quelconque des revendications précédentes, dans lequel le nœud de vérification est instancié dans le premier dispositif sans fil ou dans le premier nœud RAN.

**12.** Procédé selon la revendication 11, dans lequel l'identification d'au moins un dispositif sans fil voisin du premier dispositif sans fil comprend :

la découverte de l'au moins un dispositif sans fil voisin à l'aide d'au moins une communication de liaison latérale de dispositif à dispositif ou d'une communication sans fil à courte portée (532).

**13.** Procédé selon l'une quelconque des revendications précédentes comprenant en outre :

lors de l'apparition d'un déclencheur, le lancement d'un processus de mesure CQI pour amener le premier dispositif sans fil à générer le premier rapport de mesure CQI (410).

**14.** Nœud de vérification (900) pour vérifier une valeur de mesure CQI, le nœud de vérification comprenant un circuit de traitement (902) configuré pour :

obtenir un premier rapport de mesure CQI comprenant une première valeur de mesure CQI d'une mesure réalisée par le premier dispositif sans fil pour un premier canal de liaison descendante entre un nœud RAN et le premier dispositif sans fil ; **caractérisé en ce que** le circuit de traitement est en outre configuré pour :

identifier au moins un dispositif sans fil voisin du premier dispositif sans fil ;

obtenir au moins un rapport de mesure CQI voisin à partir de l'au moins un dispositif sans fil voisin ;

agréger l'au moins un rapport de mesure CQI voisin dans un ensemble de rapports de mesure CQI de référence ; et

vérifier la première valeur de mesure CQI à l'aide de l'ensemble de rapports de mesure CQI de référence.

**15.** Produit de programme informatique comprenant un support lisible par ordinateur, le support lisible par ordinateur comportant un code lisible par ordinateur incorporé qui, lors de son exécution par un ordinateur ou un processeur, amène l'ordinateur ou le processeur à réaliser le procédé selon l'une quelconque des revendications 1 à 13.

| CQI | Modulation | Bits/Symbol |
|-----|------------|-------------|
| 1 | QPSK | 2 |
| 2 | QPSK | 2 |
| 3 | QPSK | 2 |
| 4 | QPSK | 2 |
| 5 | QPSK | 2 |
| 6 | QPSK | 2 |
| 7 | 16QAM | 4 |
| 8 | 16QAM | 4 |
| 9 | 16QAM | 4 |
| 10 | 64QAM | 6 |
| 11 | 64QAM | 6 |
| 12 | 64QAM | 6 |
| 13 | 64QAM | 6 |
| 14 | 64QAM | 6 |
| 15 | 64QAM | 6 |

Fig. 1

Fig. 2

Fig. 3A

322a — NU X

302a — 2. CQI Request/ Response

324a — Neighbouring UE (NU) 1

320a — CQI Measuring UE (CMU)

1. Reference signals — 301a

4. CQI Report — 304a

310a — eNB/gNB

3. Perform Own Measurement and augment with CQI responses From NUs — 303a

322b — NU X

320b — CQI Measuring UE (CMU)

324b — Neighbouring UE (NU) 1

301b

310b — eNB/gNB

1. Reference signals

2. CQI Report

302b

3. Calculate CQI for group of devices — 303b

Fig. 3B

On occurrence of a trigger, initiate a CQI measurement process to cause the first wireless device to generate a first CQI measurement report

410

A handover procedure of the first wireless device to the first base station; a reference signal transmitted from the first base station to the first wireless device; a periodic trigger

412

Obtain a first CQI measurement report comprising a first CQI measurement value of a measurement performed by the first wireless device for a first downlink channel between a first RAN node and the first wireless device

420

A first CQI measurement value and at least one of: a location of the first wireless device; an identifier of the first RAN node; and a channel frequency range of the first downlink channel

422

Identify at least one neighbour wireless device to the first wireless device

430

Identify the neighbour wireless device(s) from a candidate set of wireless devices based on one or more criteria

432

Manufacturer, chipset type, antenna types

432

Obtain at least one neighbour CQI measurement reports from the at least one neighbour wireless device

440

442

Downlink channel between the first RAN node and the neighbour wireless device(s)

Aggregate the at least one neighbour CQI measurement report into a reference CQI measurement report set

450

Downlink channel between neighbour RAN node and neighbour wireless device(s)

462

444

Verify the first CQI measurement value using the aggregated CQI measurement report set

460

Provide a result of the verification to at least one of the first wireless device or the first RAN node (operable to configure a RAN operation accordingly)

Fig. 4

Fig. 5A

**530a** Identify at least one neighbour wireless device

**532** Discover the at least one neighbour wireless device using at least one of device-to-device sidelink communication and short-range wireless communication

**540a** Obtain at least one neighbour CQI measurement report

**541** Encrypt a first certificate key into a first challenge transmission

**542** Transmit the first challenge transmission to each of the at least one neighbour wireless devices

**543** Receive a second challenge transmission comprising a second certificate key from each of the at least one neighbour wireless devices

**544** Verify that the first certificate key corresponds to the second certificate key

**545** Transmit a request to at least one neighbour wireless device for at least one neighbour CQI measurement report

**546** Receive the at least one neighbour CQI measurement report from the at least one neighbour wireless devices

EP 4 454 173 B1

530b

Identify at least one
neighbour wireless device

Identify as the at least one neighbour wireless device, wireless devices that are
using a beam that is adjacent to the beam used by the first wireless device for
transmitting the first CQI measurement report

534

540b

Obtain at least one
neighbour CQI measurement
report

Transmit a reference signal to the at least one wireless device

545

Receive the at least one neighbour CQI measurement report from the at least
one neighbour wireless devices

546

Fig. 5B

550
Aggregate the at least one neighbour CQI measurement report into a reference CQI measurement report set

551
Assess whether the timestamp of each of the at least one neighbour CQI measurement reports is within a reference time window

552
Aggregate into the reference CQI measurement report set only those neighbour CQI measurement reports comprising a timestamp that is within the reference time window

553
Obtain historic CQI measurement reports from the first wireless device

554
Reports for a downlink channel between the first RAN node and the first wireless device

555
Reports for a downlink channel between a neighbour RAN node and the first wireless device

556
Aggregate the historic CQI measurement reports into the reference CQI measurement report set

Fig. 5C

560a

Verify the first CQI
measurement value
using the reference
CQI measurement
report set

562a

Determine whether each of the CQI measurement reports of the
reference CQI measurement report set satisfies a similarity criterion with
respect to the first CQI measurement report

564a

Location of the first
wireless device, identifier
of the first RAN node;
channel frequency range
of the first downlink
channel

566a

Compare the first CQI measurement value to the CQI measurement
value of each of the neighbour CQI measurement reports of the reference
CQI measurement report set that satisfies the similarity criterion

568a

Determine a reliability of the first CQI measurement value
based on the comparison

Fig. 5D

```
                    ┌─────────────────────────────────────────┐
                    │ Represent a state of the environment as  │── 561b
                    │ the first CQI measurement report and the │
                    │ reference CQI measurement report set     │
                    └─────────────────────────────────────────┘
                                      │
                                      ▼
         560b        ┌─────────────────────────────────────────┐
           /         │ Apply a policy to map the state of the   │── 562b
  ┌──────────────┐   │ environment to an action comprising a    │
  │ Verify the   │   │ measure of reliability of the first      │
  │ first CQI    │   │ CQI measurement value                    │
  │ measurement  │   └─────────────────────────────────────────┘    ┌─────────────────────────────┐
  │ value using  │                   │              563b             │ First RAN node is operable  │── 564b
  │ the reference│                   ▼                /              │ to use the measure of       │
  │ CQI          │   ┌─────────────────────────────────────────┐    │ reliability to determine    │
  │ measurement  │   │ Provide the measure of reliability to    │────│ selection of a modulation   │
  │ report set   │   │ the first RAN node                        │    │ scheme for the first        │
  └──────────────┘   └─────────────────────────────────────────┘    │ wireless device based on    │
                                      │                               │ the first CQI measurement   │
                                      ▼                               │ report                      │
           565b      ┌─────────────────────────────────────────┐    └─────────────────────────────┘
             \       │ Obtain from the communication network a  │    ┌─────────────────────────────┐
                     │ value of a reward function based on at   │────│ Reward function is          │── 566b
                     │ least one performance parameter of the   │    │ configured to increase in   │
                     │ communication network                    │    │ value with improvement in   │
                     └─────────────────────────────────────────┘    │ the at least one            │
                                      │                               │ performance parameter for   │
                                      ▼                               │ the communication network   │
                     ┌─────────────────────────────────────────┐    └─────────────────────────────┘
                     │ Update the policy for mapping the state  │── 567b
                     │ of the environment to an action on the   │
                     │ basis of the obtained reward function    │
                     │ value                                    │
                     └─────────────────────────────────────────┘
```

Fig. 5E

| Obtain a trained ML model from a repository | 561c |

| Generate an input tensor from the first CQI measurement report and the reference CQI measurement report set | 562c |

| Input the generated input tensor to the trained ML model | 563c |

| Obtain, as output of the trained ML model, a predicted CQI measurement value of the first downlink channel for the first wireless device and a measure of probability that the predicted value is correct | 564c |

560c

Verify the first CQI measurement value using the reference CQI measurement report set

| Determine a final CQI measurement value based on the first CQI measurement value and the predicted CQI measurement value | 565c |

| Provide the final CQI measurement value to the first RAN node, wherein the first RAN node is operable to select a modulation scheme for the first downlink channel between the first RAN node and the first wireless device based on the final CQI measurement value | 566c |

| Monitor a success with which the first wireless device decodes a message received on the first downlink channel using the selected modulation scheme | 567c |

| Cause the trained ML model to be updated based on the monitored success | 568c |

Fig. 5F

Fig. 6A

Fig. 6B

EP 4 454 173 B1

Fig. 7

UE 810 — eNB 820 — model_repo 830

1. cqi_index, [device_type], [location], [speed]  (811)

loop [cqi_index != new_cqi_index]

2. get_model([device_type], [location], [speed])  (821)

3. [model1, model2, model3, ...modeln]  (831)

4. predict_cqi([device_type], [location], [speed])  (822)

5. PDSCH(max(MCS), max(TB))  (823)

alt [if UE can decode(PDSCH) with BLER < t]

6. new_cqi_index <- min(cqi_index or ++cqi_index, 45)  (812a, 823a)

7. add_datapoint(cqi_index, [device_type], [location], [speed], label=True)

If it can't decode the message

8. new_cqi_index <- max(--cqi_index, 4)  (812b, 823b)

9. add_datapoint(cqi_index, [device_type], [location], [speed], label=False)

10. model <- train_model(local_dataset)  (824)

11. store(model)  (825)

Fig. 8

Fig. 9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2013028102 A1
- US 20080026744 A
- US 7672366 B
- US 10986524 B

**Non-patent literature cited in the description**

- **KIM DONGHO et al.** A Study on False Channel Condition Reporting Attacks in Wireless Networks. *IEEE TRANSACTIONS ON MOBILE COMPUTING, IEEE SERVICE CENTER, LOS ALAMITOS, CA, US*, May 2014, vol. 13 (5)
- Scheduling and Power Allocation Dampens the Negative Effect of Channel Misreporting in Massive MIMO. **ZHANG ZHANZHAN et al.** IEEE /ACM TRANSACTIONS ON NETWORKING. IEEE / ACM, 19 August 2020, vol. 28
- **YIN**. *Predicting Channel Quality Indicators for 5G Downlink Scheduling in a Deep Learning Approach*
- **HADO BY VAN HASSELT et al.** Deep Reinforcement Learning with Double Q-learning. *arXiv:1509.06461.*
- **MATTHEW HAUSKNECHT et al.** Deep Recurrent Q-Learning for Partially Observable MDPs. *arXiv:1507.06527.*